# EUROPEAN PATENT APPLICATION

(11) **EP 4 752 779 A1**
(43) Date of publication of application: **03.06.2026**
(21) Application number: 25219912.0
(22) Date of filing: 01.12.2025
(51) Int. Cl.: G06F 30/323, G06F 30/337, G06F 30/327

(54) **DON'T CARE-BASED TRANSISTOR NETLIST OPTIMIZATION**

(30) Priority: 02.12.2024 US 202463726798 P; 23.10.2025 US 202519367055
(71) Applicant: GDM Holding LLC, Mountain View, CA 94043 (US)
(72) Inventor: Ruic, Dino, Mountain View, 94043 (US); Yan, Jin, Mountain View, 94043 (US); de Melo Costa, Bruno, Mountain View, 94043 (US)
(74) Representative: Marks & Clerk GST

(57) **Abstract**

The present technology is related to transistor synthesis optimization during the physical design stage of EDA. Aspects of the present technology introduces new ways to restructure transistor-level netlists, such as by reducing transistor count, for digital circuit designs based on the enumeration of "don't cares" of internal nets. One aspect of the present technology includes connecting internal nets with the same truth table up to don't cares without changing the functionality of the entire circuit. With an additional connection in the netlist, optimization opportunities can be identified that may remove transistors and/or improve placement, routing, and/or timing metrics. Furthermore, optimization opportunities may be further increased by (pre)computing satisfiability don't cares at the inputs of the netlist and observability don't cares at the outputs of the netlist from the environment.

## Description

### CROSS-REFERENCE TO RELATED APPLICATIONS

This application claims the benefit of the filing date and priority to U.S. Provisional Patent Application No. 63/726,798, filed December 2, 2024, the entire disclosure of which is incorporated by reference herein.

### BACKGROUND

Electronic design automation (EDA), also referred to as electronic computer-aided design (ECAD), refers to a process, and set of software tools, used for designing electronic systems, such as integrated circuits (ICs), printed circuit boards (PCBs), and the like. The EDA process encompasses a series of steps to design and implement digital circuits from high-level specifications to physical hardware. Some steps in the EDA process include logic synthesis and physical design.

Physical design is based on the gate-level netlist, which is the result of the logic synthesis. During the physical design stage, the gate-level netlist is converted into a physical layout that can be manufactured as an IC. Some EDA flows include transistor synthesis as part of their physical design processes. Transistor synthesis generally involves replacing each gate from the gate-level netlist with transistor-level circuitry, which may involve utilizing one or more types of transistor types to replicate the logic gates. Additionally, some transistor synthesis processes include utilizing optimization techniques to achieve the best possible balance between critical design parameters. By automating the optimization process, these optimization techniques can reduce design time, improve overall chip quality, and help meet increasingly stringent design constraints in modern semiconductor technologies.

Most optimization algorithms primarily focus on parameter optimization, such as adjusting transistor sizes, threshold voltages, or optimizing performance, power, and area. One drawback for some optimization techniques, such as gradient descent, simulated annealing (SA), genetic algorithms (GA), particle swarm optimization (PSO), sequential quadratic programming (SQP), multi-objective optimization (MOO), and/or the like, is that they are computationally expensive in terms of resource consumption, thereby limiting the number of iterations that can be practically performed. Another common drawback of such techniques is that they can sometimes get stuck in local optima traps, wherein the solution being optimized gets stuck in a suboptimal configuration (the local optimum) instead of reaching the best possible solution (the global optimum). Furthermore, most optimization techniques are not primarily designed to restructure transistor-level netlists to find optimal circuit arrangements. In order to perform topological or structural optimization of transistor-level netlists, such optimization techniques would at least need substantial redesigns. Thus, such approaches can result in insufficient and/or ineffective solutions.

### SUMMARY

The present technology is related to transistor synthesis optimization during the physical design stage of EDA. Aspects of the present technology introduces new ways to restructure transistor-level netlists, such as by reducing transistor count, for digital circuit designs based on the enumeration of "don't cares" of internal nets. One aspect of the present technology includes connecting internal nets with the same truth table up to don't cares without changing the functionality of the entire circuit. With an additional connection in the netlist, optimization opportunities can be identified that may remove transistors and/or improve placement, routing, and/or timing metrics. Furthermore, optimization opportunities may be further increased by (pre)computing satisfiability don't cares at the inputs of the netlist and observability don't cares at the outputs of the netlist from the environment.

Some embodiments include a computer-implemented method of transistor synthesis. The method includes identifying, by at least one processor, a set of nets within a transistor-level netlist. The method includes computing, by the at least one processor, truth tables for each net in the set of nets. The method includes identifying, by the at least one processor, a subset of nets from the set of nets having same truth tables up to don't cares. The method includes generating, by the at least one processor, a circuit configuration by connecting at least two nets from the subset of internal nets. The method includes attempting, by the at least one processor, restructuring of the circuit configuration based on don't cares in truth tables of the connected at least two nets. The method includes generating, by the at least one processor, an updated transistor-level netlist based on the restructured circuit configuration.

In some embodiments, the computing the truth tables comprises: identifying, by the at least one processor, a first subset of nets from among the set of nets that are connected to a power source when an input is applied to a transistor network of the transistor-level netlist; identifying, by the at least one processor, a second subset of nets from among the set of nets that are connected to ground when the input is applied to the transistor network; and identifying, by the at least one processor, a third subset of nets from among the set of nets that are unconnected when the input is applied to the transistor network, wherein the nets in the third subset are designated as don't cares.

In some embodiments, identifying the subset of nets having the same truth tables up to don't cares comprises: converting, by the at least one processor, an output of each net into a binary number based on the truth tables of each net; and performing, by the at least one processor, a modulo don't care comparison of the binary number of each net, wherein don't care bits are treated as wildcard values matching any value in their respective positions.

In some embodiments, attempting the restructuring of the circuit configuration comprises: removing, by the at least one processor, at least one transistor from the circuit configuration. In some embodiments, the at least one transistor is removed from the circuit configuration when: the at least one transistor is a p-channel metal-oxide-semiconductor (PMOS) and is positioned closer to a power source than another transistor in the circuit configuration; or the at least one transistor is a n-channel metal-oxide-semiconductor (NMOS) and is positioned closer to a ground source than another transistor in the circuit configuration. In some embodiments, the at least one transistor is removed from the circuit configuration when the at least one transistor is determined to be a satisfiability don't care or on observability don't care. In some embodiments, removing the at least one transistor from the circuit configuration comprises: removing at least one of at least two adjacent transistors after connecting the at least two nets from the subset of nets; and determining whether the circuit configuration has a same output with and without the removed the at least one of at least two adjacent transistors.

In some embodiments, attempting the restructuring of the circuit configuration comprises: inserting, by the at least one processor, at least one transistor into the circuit configuration. In some embodiments, the at least one transistor into the circuit configuration by connecting the at least one transistor to a wire connecting the at least two nets.

In some embodiments, attempting the restructuring of the circuit configuration comprises: rearranging, by the at least one processor, a position or orientation of one or more transistors in the circuit configuration.

In some embodiments, generating the circuit configuration comprises: connecting the at least two nets from the subset of internal nets without changing the functionality of the entire circuit.

In some embodiments, the method further comprises outputting the updated transistor-level netlist. In some embodiments, the method further comprises outputting the updated transistor-level netlist for transmission to a fabrication facility for fabrication of an integrated circuit. In some embodiments, the method further comprises transmitting the updated transistor-level netlist to the fabrication facility for fabrication of an integrated circuit. In some embodiments, the method further comprises providing the updated transistor-level netlist to a fabrication facility for fabrication of an integrated circuit. The netlist may be a transistor-level intended to be physically implemented on an integrated circuit. The updated transistor-level netlist may be intended for use in fabricating an integrated circuit.

In some embodiments, the method further comprises outputting a design file (e.g. a graphic design system (GDSII) or open artwork system interchange standard (OASIS) file) for fabrication by a fabrication facility, e.g. by a foundry.

In some embodiments, the method further comprises manufacturing, by a fabrication facility, an integrated circuit based on the updated transistor-level netlist. Some embodiments include a method of fabricating an integrated circuit, by a fabrication facility, based on the updated transistor-level netlist.

Some embodiments include a computer-readable storage media. The computer-readable storage media is configured to store instructions, which when executed by at least one processor is to cause the at least one processor to perform resynthesis according to any of the methods described previously and/or as discussed herein.

Some embodiments include a computing system. The computing system includes at least one memory device configured to store instructions for performing transistor synthesis, and at least one processor connected to the at least one memory device. The at least one processor is configured to execute the instructions to: identify a set of nets within a transistor-level netlist; compute truth tables for each net in the set of nets; identify a subset of nets from the set of nets having same truth tables up to don't cares; generate a circuit configuration by connecting at least two nets from the subset of internal nets; attempt restructuring of the circuit configuration based on don't cares in truth tables of the connected at least two nets; and generate an updated transistor-level netlist based on the restructured circuit configuration.

In some embodiments, the computing of the truth tables comprises: identify a first subset of nets from among the set of nets that are connected to a power source when an input is applied to a transistor network of the transistor-level netlist; identify a second subset of nets from among the set of nets that are connected to ground when the input is applied to the transistor network; and identify a third subset of nets from among the set of nets that are unconnected when the input is applied to the transistor network, wherein the nets in the third subset are designated as don't cares.

In some embodiments, the identification of the subset of nets having the same truth tables up to don't cares comprises: convert an output of each net into a binary number based on the truth tables of each net; and perform a modulo don't care comparison of the binary number of each net, wherein don't care bits are treated as wildcard values matching any value in their respective positions.

In some embodiments, the attempting the restructuring of the circuit configuration comprises: remove at least one transistor from the circuit configuration. In some embodiments, the at least one transistor is removed from the circuit configuration when: the at least one transistor is a p-channel metal-oxide-semiconductor (PMOS) and is positioned closer to a power source than another transistor in the circuit configuration; or the at least one transistor is a n-channel metal-oxide-semiconductor (NMOS) and is positioned closer to a ground source than another transistor in the circuit configuration. In some embodiments, the at least one transistor is removed from the circuit configuration when the at least one transistor is determined to be a satisfiability don't care or on observability don't care. In some embodiments, the removal of the at least one transistor from the circuit configuration comprises: remove at least one of at least two adjacent transistors after connecting the at least two nets from the subset of nets; and determine whether the circuit configuration has a same output with and without the removed the at least one of at least two adjacent transistors.

In some embodiments, the attempting of the restructuring of the circuit configuration comprises: insert at least one transistor into the circuit configuration. In some embodiments, the at least one transistor into the circuit configuration by connecting the at least one transistor to a wire connecting the at least two nets.

In some embodiments, the attempting of the restructuring of the circuit configuration comprises: rearrange a position or orientation of one or more transistors in the circuit configuration.

In some embodiments, generating the circuit configuration comprises: connecting the at least two nets from the subset of internal nets without changing the functionality of the entire circuit.

In some embodiments, the at least one processor is configured to output the updated transistor-level netlist. In some embodiments, the at least one processor is configured to output the updated transistor-level netlist for transmission to a fabrication facility for fabrication of an integrated circuit. In some embodiments, the at least one processor is configured to transmit the updated transistor-level netlist to the fabrication facility for fabrication of an integrated circuit. In some embodiments, the at least one processor is configured to provide the updated transistor-level netlist to a fabrication facility for fabrication of an integrated circuit. The netlist may be a transistor-level intended to be physically implemented on an integrated circuit. The updated transistor-level netlist may be intended for use in fabricating an integrated circuit.

In some embodiments, the at least one processor is configured to output a design file (e.g. a graphic design system (GDSII) or open artwork system interchange standard (OASIS) file) for fabrication by a fabrication facility, e.g. by a foundry.

Some embodiments include a fabrication facility configured to fabricate an integrated circuit based on the updated transistor-level netlist.

### BRIEF DESCRIPTION OF THE DRAWINGS

Fig. 1 illustrates an example electronic design automation flow for use with aspects of the present technology.
Fig. 2 illustrates an example NOR gate in accordance with aspects of the present technology.
Figs. 3A, 3B, and 3C illustrate an example inverter NOR gate in accordance with aspects of the present technology.
Fig. 5 illustrates an example of simplifying a circuit based on satisfiability don't cares in accordance with aspects of the present technology.
Figs. 5A, 5B, and 5C illustrate a timing optimization example in accordance with aspects of the present technology.
Fig. 6 illustrate an example full adder in accordance with aspects of the present technology.
Fig. 7 illustrates an example transistor-netlist optimization process in accordance with aspects of the present technology.
Figs. 8-9 illustrate an exemplary system in which aspects of the technology can be practiced.

### DETAILED DESCRIPTION

The present technology is related to optimization of transistor synthesis during the physical design phase of EDA. As mentioned previously, many optimization techniques are not primarily designed to restructure transistor-level netlists, such as by removing transistors, adding alternative transistors, and/or rearranging transistors. Aspects of the present technology introduces new ways to restructure transistor-level netlists and/or IC layouts based on the enumeration of "don't cares" of internal nets. These and other aspects of the present technology are further described infra.

### 1. Don't Care-Based Transistor Netlist Optimization Examples

EDA is a process, and set of software tools, used for designing electronic systems, such as ICs, PCBs, and the like. The EDA process encompasses a series of steps to design and implement digital circuits from high-level specifications to physical hardware. The process mainly includes steps, such as system design or specification, logic design, logic synthesis, physical design, physical synthesis, physical verification, and tapeout. Additional or alternative steps/processes may be included in an EDA process in other implementations.

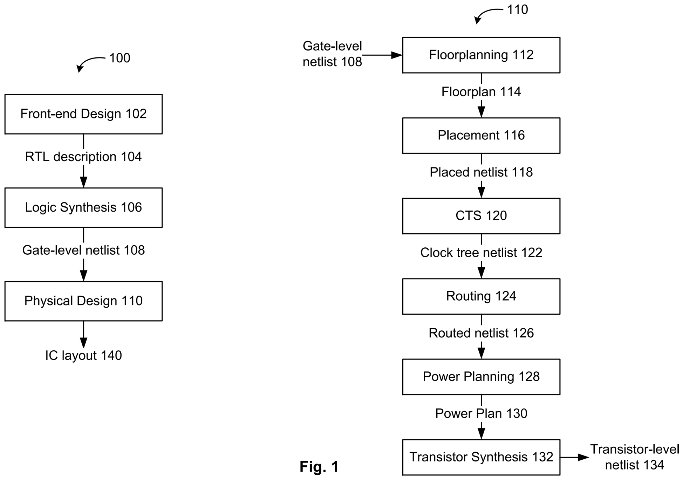

Fig. 1 depicts an example EDA flow 100 in accordance with aspects of the present technology. In this example, the EDA flow 100 includes a front-end design flow 102, logic synthesis flow 106, and physical design flow 110. Various commercially available or proprietary EDA tools may be used to perform design and simulation tasks of the EDA flow 100, such as register-transfer level (RTL) synthesis tools, system design and functional verification tools, logic synthesis tools such as graphing engines and optimization engines, physical design tools, circuit design and simulation tools, PCB design tools, and/or the like.

The front-end design flow 102 is the initial phase of the digital design process, which involves creating the functional specification and logical implementation of a circuit. The front-end design flow 102 typically begins with architectural design, where the overall structure and major components of the system are defined based on the project requirements and constraints. Next, an abstract specification of circuit behavior is coded, created, or generated, which specifies the circuit's behavior in terms of data flow between registers and the logical operations performed on that data. In this example, the abstract specification are in the form of an RTL circuit description 104. The RTL description 104 may be expressed using a hardware description language (HDL), such as VHDL, Verilog, MyHDL, Clash, Chisel, and the like. The RTL description 104 defines the flow of data between registers and the logical operations performed on that data. Additionally or alternatively, the RTL description 104 may describe bitstreams for programmable logic devices (PLDs), such as programmable array logic (PAL), complex PLDs, field-programmable gate arrays (FPGAs), programmable System-on-Chip (SoC) platforms, and the like. The RTL description 104 may be generated using a high-level synthesis (HLS) tool. HLS tools automatically synthesize circuits specified using high-level programming languages, such as C, C++, SystemC, MATLAB, and the like, into a functionally-equivalent RTL hardware implementation, such as RTL description 104. In some implementations, functional verification follows the abstract specification coding, such as RTL coding, which involves simulation and testing to ensure the abstract specification, such as the RTL code 104, accurately implements the intended functionality and meets desired design specifications.

Logic synthesis 106 is a process of converting an abstract specification of circuit behavior, such as the RTL description 104, into a circuit design implementation in terms of logic gates, flip-flops, and the like that can be physically implemented on an IC. The logic synthesis flow 106 transforms, translates, or transcodes the RTL description 104 into gate-level descriptions, such as logic gate-level netlist 108. The gate-level netlist 108 is a description of the connectivity of a logic circuit, which is usually in the form of a logical data structure, such as an AND-inverter graph (AIG), binary decision diagram (BDD), sum-of-product form (ΣoΠ), Boolean network, and/or other logical data structure(s). The output of the logic synthesis flow 106, such as the logic gate-level netlist 108, may be the input to a physical processing stage 110 of an EDA process. The logic synthesis flow 106 typically includes three stages: a logic translation stage performed by a translation engine, a logic optimization stage performed by an optimization engine, and a technology mapping stage performed by a technology mapping engine.

The logic translation stage involves a translation engine translating the RTL description 104 into a non-optimized logical netlist based on, for example, technology libraries of standard cells, gates, and/or other logical components. At the logic optimization stage, an optimization engine optimizes the netlist based on design constraints and objectives. The design constraints and objectives may be defined by the libraries, scripts, markup documents, and/or other suitable data structure(s). For example, the synthesis constraints can include environment constraints, design constraints, and logic optimization constraints. The environment constraints include aspects of the external environment where the circuit is intended to operate, such as temperature, voltage, drive, load, and/or the like. The design constraints include design-related aspects of the circuit such as, for example, maximum transition time, maximum fan-out, minimum capacitance, maximum capacitance, and/or the like.

The logic optimization constraints include constraints related to aspects of the optimization of the netlist, such as timing constraints and area constraints. The timing constraints may limit, for example, clock networks, timing paths, critical path delays, asynchronous logic timing, and the like. The area constraints may limit, for example, the maximum number of logic units and the like. To optimize netlist, the optimization engine may be configured to operate an optimization algorithm. For example, the optimization algorithm may be an SA algorithm flow for And-Inverter Graph (AIG) optimization in which a randomly selected sequence of transformations are applied to a given (current) AIG, and the new AIG depth and node count are used to evaluate the cost or reward for the transformed AIG. However, it should be noted that another optimization algorithm/flow could be used, such as an evolutionary algorithm, GA, Bayesian optimization algorithm, a machine learning approach, and/or other approach.

At the technology mapping stage, the technology mapping engine selects logical elements, such as logic gates, to implement the optimized netlist. This may include, for example, selecting logic unit instances, such as logic gates, from the same or different technology libraries to implement a gate-level logic netlist 108. The selection may be based on various constraints, such as time sequence or other timing constraints, power, performance, and area (PPA) constraints (e.g., power consumption, performance in terms of speed and/or delay, and circuit area), logic unit characteristics, logical relationships, and the area of logic units provided by the technology libraries.

Each logic gate may be a device, or collection of hardware elements, that performs a Boolean function or a logical operation performed on one or more binary inputs that produces a binary output. Examples of such logic gates can include NOT or inverter (INV) gates, AND gates, OR gates, NOT AND (NAND) gates, NOT OR (NOR) gates, exclusive OR (XOR) gates, exclusive NOR (XNOR) gates, compound logic gates such as AND-OR-Inverters (AOI) and OR-AND-Inverters (OAI), Full Adders (FAs), and/or other gates, some or all of which may be formed from combinations of various diodes, transistors, and/or other electrical elements. Various combinations of logic gates may form logic circuits, such as multiplexers, demultiplexers, registers, arithmetic logic units (ALUs), encoders, decoders, computer memory, microprocessors, and/or the like.

The physical design flow 110 transforms the logical representation of a circuit, such as the gate-level netlist 108 from the logic synthesis flow 106, into a physical layout that can be manufactured as an IC, such as IC layout 140. As shown by Fig. 1, the physical design flow 110 in this example includes the following steps or stages: floorplanning 112, placement 116, clock tree synthesis (CTS) 120, routing 124, power planning 128, and transistor synthesis 132 (also known as transistor-level implementation or cell synthesis). The physical design flow 110 may be an iterative process where one or more of the stages/steps may be revisited multiple times as the circuit's design evolves or becomes more optimized. Additionally or alternatively, at least some of the stages/steps in the physical design flow 110 may be run or executed multiple times before moving to a subsequent stage to optimize or refine the desired output of those stages. Additionally or alternatively, at least some of the stages/steps of the physical design flow 110 may be executed concurrently or run simultaneously, such as to optimize placement, routing, and transistor sizing at stages 116, 124, and 132, respectively. Additionally or alternatively, the timing and/or order of individual stages may vary depending on the specific EDA flow 100 and EDA tools being used. For example, in some implementations, aspects of transistor synthesis 132 or one or more other stages may be integrated earlier in the EDA process 100. Furthermore, the physical design flow 110 may include steps/stages in addition or alternative to those shown by Fig. 1. For example, the physical design flow 110 may include thermal analysis, physical verification, and/or tape-out steps/stages.

In the example of Fig. 1, the physical design 110 may begin with the gate-level netlist 108 being input to the floorplanning stage 112. In addition to the gate-level netlist 108, additional inputs to the physical design flow 110, such as at the floorplanning 112, may include, for example, a technology library, timing library, physical library, design constraints, and/or the like. The technology library, provided by the foundry, such as foundry 812, containing information about the available standard cells, geometry of each cell, macros, via information, design rules, manufacturing process(es), and/or the like. This includes both the physical layout details indicated by, for example, a library exchange format (LEF) file, and the electrical/timing characteristics indicated by, for example, a liberty timing file (LIB). The timing library, which may be the LIB part of the technology library, specifies the timing characteristics of standard cells and macros, such as the aforementioned electrical/timing characteristics. The physical library, which may also be part of the LEF part of the technology library, describes the physical layout and geometry of standard cells and macros. The geometric information may be used for initial placement and routing estimations. Additionally or alternatively, the LEF file may contain rules related to the fabrication process, placement and routing design rules, and process information for various layers. The design constraints include clock definitions, timing requirements, and other design rules. Design constraints may be included in a standard design constraints (SDC) file, sometimes referred to as a Synopsys design constraints (SDC) file. In some implementations, a power file, such as a unified power format (UPF) file, which specifies the power intent of the design, including power domains, power switches, and other power management strategies.

Floorplanning 112 is the initial step in physical design flow 110 where the IC's overall structure is determined. Floorplanning 112 typically involves partitioning the chip area into functional blocks and allocating space for each block in consideration of factors, such as chip size and/or shape, aspect ratio, locations of input/output (I/O) pads (e.g., power, ground, and signal pads), core utilization, and/or other factors. In some implementations, floorplanning 112 may also include initial power planning and placement of input, output, macro blocks, and core modules in or on the chip.

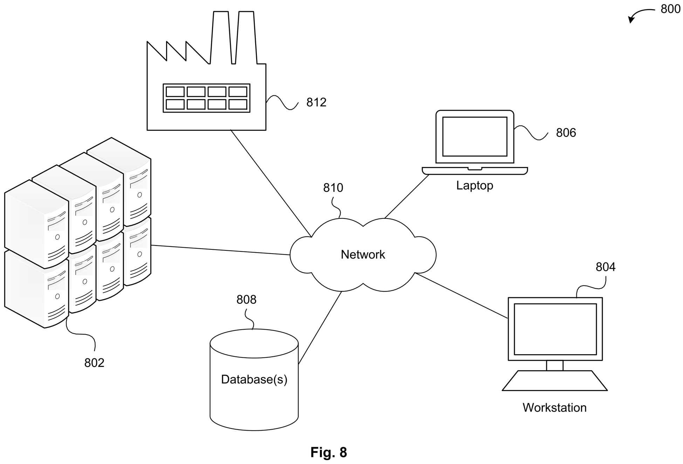

The cells may be relatively small, standardized functional elements of digital logic circuits such as, for example, logic gates (e.g., AND, OR, NOT, NAND, NOR, XOR, FA, etc.), flip-flops, latches, small analog components (e.g., transistors, resistors, capacitors), and/or the like. Cells are typically provided by a foundry or technology library vendor, such as foundry 812 of Figs. 8-9. The macro blocks (or macros) may be relatively large, complex functional blocks that are predesigned and pre-characterized such as, for example, memory blocks (e.g., SRAM, DRAM, etc.), analog/mixed-signal blocks (e.g., analog-to-digital converters (ADCs), digital-to-analog converters (DACs), phased-locked loops (PLLs), etc.), processor cores, I/O interfaces, and/or the like. Macros are sometimes designed by specialized developer/designer teams, obtained from third-party intellectual property (IP) providers, and/or provided by a foundry or technology library vendor, such as foundry 812 of Figs. 8-9.

A result or output of the floorplanning stage 112 is a floorplan 114. The floorplan 114 may include or indicate, for example, chip dimensions and shape, placement of macro blocks and I/O pads, power grid structure, major routing channels, and/or the like. In some examples, the floorplan 114 is embodied as a design exchange format (DEF) file, which describes the physical layout of the circuit. In some implementations, the floorplanning stage 112 may also output an initial power plan file, such as a UPF file, which specifies the power intent of the design, including power domains, power switches, and other power management strategies. The power plan file may be used for power-aware design, analysis, and optimization, such as during the power planning stage 128 and transistor synthesis stage 132. The UPF file is typically introduced after the initial floorplanning stage 112 and/or placement stage 116, as the power intent becomes more defined and/or refined.

The placement stage 116 involves determining and placing the location, position, and/or orientation of standard cells and macro blocks within the chip area. The placement stage 116 may aim to optimize for factors like wire length, timing, power consumption, and area utilization. In some implementations, the placement 116 may be performed automatically according to the floorplan 114 and/or the other files imported into the physical design flow 110, such as those described previously. In some implementations, the placement 116 may be performed automatically using analytical algorithms such as quadratic placement, nonlinear programming, or convex optimization, or using force-directed placement, partitioning-based placement, SA-based placement, or other optimization techniques.

A result or output of the placement stage 116 is a placed netlist 118, which may include the location, position, and/or orientation of each standard cell and macro block, as well as updated floorplan information. In some implementations, the placed netlist 118 may be embodied as a DEF file, which may be referred to herein as a placed DEF file 118. In some examples, the placed DEF file 118 is an updated version of the floorplan DEF 112. Additionally or alternatively, the placed DEF file 118 is a separate file from the floorplan DEF 112. Additionally or alternatively, the placement stage 116 may also output an updated SDC file and/or placement reports including, for example, congestion and timing estimates.

The CTS 120 involves creating a network or tree structure, which may be referred to as a "clock tree" or the like, to distribute a clock signal to sequential elements (e.g., flip-flops, etc.) in the circuit to ensure a clock signal is delivered uniformly across the design. The clock tree is a hierarchical structure of buffers and inverters that drive the clock signal. The clock tree may be generated by inserting and sizing clock buffers and inverters along the clock path and may also consider factors such as load balancing, clock gating, and multiple clock domains. The clock tree may be generated based on the gate-level netlist 108, technology library, floorplan 114, and clock specifications. Here, the floorplan 114 may provide the physical locations of cells and flip-flops, and the clock specifications may define clock sources, target clock sinks, and constraints like maximum skew or delay. As an example, the clock specifications may be included in the SDC file. while attempting to minimize clock skew and latency while managing power consumption. Minimizing skew involves attempting to reduce the differences in arrival times between different clocked elements, improving timing performance and overall design reliability.

A result or output of the CTS 120 is a clock tree netlist 122, which may include information about the inserted clock buffers and inverters, the locations of the inserted clock buffers and inverters, and clock routing information that was added during the CTS 120. In some implementations, the clock tree netlist 122 may be embodied as a DEF file, which may be referred to herein as a clock tree DEF file 122. In some examples, the clock tree DEF file 122 is an updated version of the placed DEF file 114 and/or floorplan DEF 112. Additionally or alternatively, the clock tree DEF file 122 is a separate file from the floorplan DEF 112 and/or the placed DEF file 114. Additional outputs of the CTS 120 may include updated timing constraints, clock tree spice netlist, clock tree report(s) indicating skew, latency, power, and/or the like.

The routing stage 124 establishes the physical connections between placed components using metal layers. In some implementations, the routing stage 124 automatically adds wires to connect the placed components while conforming to the design rules, such as those specified by the design constraints file mentioned previously. Routing algorithms or autorouters typically navigate the design rules while optimizing for timing, crosstalk, and manufacturability. The routing algorithms or autorouters may include grid-based routers, gridless routers, graph theory-based routers, negotiation-based routers, and/or the like.

A result or output of the routing stage 124 is a routed netlist 126, which includes detailed routing information for all nets, via locations, metal layer assignments, and/or other like information. In some implementations, the routed netlist 126 may be embodied as a DEF file, which may be referred to herein as a routed DEF file 126. In some examples, the routed DEF file 126 is an updated version of the clock tree DEF file 122, placed DEF file 114, and/or floorplan DEF 112. Additionally or alternatively, the routed DEF file 126 is a separate file from the floorplan DEF 112, the placed DEF file 114, and/or clock tree DEF file 122.

The power planning stage 128 involves designing and optimizing the power distribution/delivery network (PDN) for the chip considering factors such as current density, metal resistance, switching activity, and the like based on, for example, the floorplan 114, placed netlist 118, technology library, and power intent file (UPF) if available. The PDN is a structure that delivers or distributes power ("PWR" or "VDD") and ground ("GND" or "VSS") across the chip to prevent voltage drops and ensure adequate power delivery to the macros, standard cells, and other elements in the circuit. Creating the PDN may involve creating and/or arranging power rails, decoupling capacitors, interconnects, and straps. Power grid design may take place after the PDN is created. The power grid design includes a grid of metal wires layered across the chip, forming horizontal and vertical tracks, to distribute power uniformly and reduce resistance and inductance. The power grid design may be a subset of the PDN. The power grid design affects the current and resistance (IR) drop across the chip, which can necessitate specific transistor sizes to maintain performance in low-voltage areas. In some implementations, the power planning stage 128 includes power plan floorplanning to define regions for power and GND pins. In these implementations, the PDN design may take place after the initial power floorplanning.

A result or output of the power planning stage 128 is a power plan file 130, such as a UPF file, which may include detailed power and ground network layout (e.g., the PDN). In some examples, the power plan file 130 may include decoupling capacitor placements, IR drop analysis report(s), power grid verification report(s), and/or the like.

Transistor synthesis 132 involves converting the gate-level netlist 108 into a transistor-level netlist 134 based on, for example, the gate-level netlist 108, the placed netlist 118, the power plan 130, the technology library, the timing library, the design constraints, and/or other information. In some implementations, the transistor synthesis stage 132 may involve directly mapping from an optimized netlist, such as an AIG output from the logic translation stage, into a transistor-level netlist 134 rather than extracting transistors from the gate-level netlist 108. In some implementations, the transistor-level netlist 134 may also be generated based on parasitic extraction information. Parasitic extraction is an EDA process that calculates parasitic effects in electronic circuits, such as parasitic resistances, parasitic capacitances, and parasitic inductances. These effects are also known as parasitic components, parasitic devices, or parasitics. In some implementations, the parasitic extraction information may be embodied as a standard parasitic format (SPF) file, standard parasitic extraction format (SPEF) file, detailed standard parasitic format (DSPF) file, reduced standard parasitic format (RSPF) file and/or the like.

The transistor synthesis stage 132 typically includes replacing logical gates from the gate-level netlist 108 with their transistor-level implementations, sizing transistors for optimal performance, power, and area, and generating the final layout of individual cells, which may be in the form of a transistor-level netlist 134. In some implementations, when moving from logic gates (e.g., NAND, NOR, FA, etc.) to transistors, the transistor synthesis stage 132 may involve an elaboration in which known transistor(s), or known arrangements of multiple transistors, for each gate are inserted into a netlist. In such implementations, each logic gate may have a known transistor configuration as defined or specified by a standard library and/or the like. For example, NAND and NOR gates may have standard layouts using some combination of PMOS and/or NMOS transistors. When elaborating, high-level gates in a netlist, such as gate-level netlist 108 or an AIG, may be replaced with the predefined transistor arrangements. This process is sometimes automatically performed using suitable EDA tools, where gates are expanded into transistor netlists, such as netlist 134, that match the desired behavior.

In other implementations, the transistor synthesis stage 132 can include mapping logical gates from the gate-level netlist 108 to their transistor-level implementations. For example, individual logic gates in the gate-level netlist 108 may be mapped to a corresponding cell in a standard cell library. Additionally or alternatively, one or more logic gates in the gate-level netlist 108 may be mapped to a corresponding macro block from a macro block library or the like. Here, the cells and/or macro blocks may include one or more transistors and/or other hardware elements. The transistors in the cells and blocks may include, for example, field-effect transistors (FET), metal-oxide-semiconductor FET (MOSFET), junction FET (JFET), tunnel FET (TFET), bipolar junction transistors (BJT), insulated-gate bipolar transistor (IGBT), carbon nanotube FET (CNFET), junction-less nanowire transistor (JNT), three-dimensional (3D) transistors, and/or any other type of transistors. The cells and/or macro blocks may also include wires or interconnects between elements and/or other hardware elements such as capacitors, diodes, resistors, inductors, and/or the like.

An initial transistor-level netlist may be the result of the mapping of logic gates in the gate-level netlist 108 to cells, macros, or other combinations of transistors. Then, transistor sizing may take place where the transistor sizes of the transistors in the initial transistor-level netlist are optimized for performance, power, and area. Next, a physical layout of transistors and interconnects is generated from the (re)sized transistor-level netlist to produce a final transistor-level layout, such as the transistor-level netlist 134. The transistor-level netlist 134 may include detailed transistor sizes and connections and internal cell layouts. Additional outputs of the transistor synthesis 132 may include transistor sizing report(s) and updated timing and power analysis report(s).

Various algorithms and techniques can be used for the different aspects of transistor synthesis 132, such as library mapping algorithms (e.g., technology mapping, Boolean matching, pattern matching), transistor sizing algorithms (e.g., logical effort method, convex optimization techniques, transistor sizing for logical effort (TILOS), machine learning techniques, etc.), layout generation algorithms (e.g., compaction algorithms, maze routing, channel routing, etc.), optimization algorithms (e.g., SA, GA, linear programming, etc.), and/or the like. It should also be noted that, at least in some implementations, other stages in the physical design flow 110 may interact with or otherwise influence transistor synthesis 132. For example, floorplanning 112 may sets the overall constraints and environment for transistor synthesis 132; placement 116 may have a bidirectional relationship with transistor synthesis 132 where each stage influences the other iteratively; coordination between the CTS 120 and transistor synthesis 132 may be performed to meet timing and power goals; and parasitic information provided by the routing stage 124 may be used to guide transistor sizing. The transistor-level netlist 134 may be embodied as a simulation program with integrated circuit emphasis (SPICE) file, Verilog-A file, electronic design interchange format (EDIF) file, circuit description language (CDL) file, or a proprietary formats.

In various embodiments of the present technology, the initial transistor-level netlist and/or the transistor-level netlist 134 may be optimized or simplified based on the "don't cares" of a circuit's internal nets. In circuit design, "don't cares" (DCs) refer to input conditions for which the output value is irrelevant or unspecified. In some cases, a DC may have a voltage that is somewhere between the thresholds defined for logical 0 and logical 1. Additionally, "internal nets" may refer to signals or connections within a digital circuit that are neither primary inputs nor primary outputs, and may represent intermediate results of logic operations. Additionally or alternatively, "internal nets" may refer to the connections that link internal components within a circuit and/or the connections between logic gates within a circuit. For example, an internal net can refer to connections in transistor-level netlists, such as transistor-level netlist 134, where they represent the wiring between individual transistors and other circuit elements in the netlist defining the flow of signals at the transistor level within the circuit. One aspect of the present technology is to connect internal nets with the same truth tables up to DCs without changing the functionality of the entire circuit. Here, the same truth tables "up to DCs" may refer to truth tables having the same outputs without regard to DC conditions in any of the truth tables being compared. For example, where two truth tables are being compared, if the output columns of the two truth tables are the same but for the existence of a DC in one or both of the truth tables, then the two truth tables may be considered equivalent. In this example, the two equivalent truth tables may be combined, and thus, the corresponding nets may be connected, combined, or otherwise rearranged. With an additional connection in the netlist, such as transistor-level netlist 134, optimization opportunities can be identified that may remove transistors and/or improve placement, routing, and/or timing metrics. For example, DCs in the transistor-level netlist 134 can be identified, and based on the identified DCs, the transistor-level netlist 134 can be restructured to open up optimization opportunities. Furthermore, optimization opportunities may be further increased by (pre)computing satisfiability DCs at the inputs of the netlist and observability DCs at the outputs of the netlist from the environment.

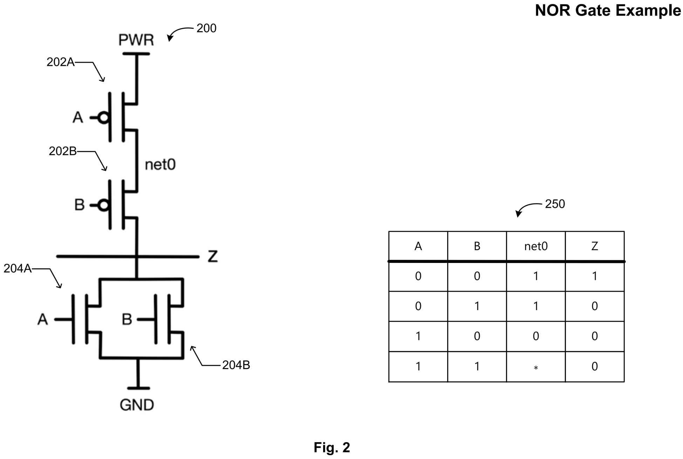

In some aspects, DC-based restructuring can be done at any stage of the physical design flow 110. For example, in some implementations, the identification of DCs and DC restructuring can be performed on the initial transistor-level netlist during or after the initial mapping of logic gates to transistor cells or macros. Additionally or alternatively, the identification of DCs and DC restructuring can be performed on the initial transistor-level netlist during or after the transistor resizing process. Additionally or alternatively, the identification of DCs and DC restructuring can be performed on the final transistor-level netlist 134, for example, after one or more other optimization processes are performed on the initial and/or resized transistor-level netlist. DC-based restructuring performed at or during earlier physical design stages may influence one or more downstream stages, which may result in a better local optimum being found. When DC-based restructuring is performed at or during later physical design stages, more information about the final PPA metrics may be determined, which could allow for more targeted transformations. Aspects of the DC identification and DC-based restructuring are discussed in more detail infra with respect to Figs. 2-8.

Although not shown by Fig. 1, a physical verification process, sometimes referred to as "sign-off", may take place after transistor synthesis 132. The physical verification process may involve verifying various aspects of the IC layout 140 via one or more EDA software tools to ensure correct electrical and logical functionality and manufacturability. The verification processes may include, for example, design rule checks (DRC), layout versus schematic (LVS) checks, exclusive OR (XOR) checks, antenna checks, and electrical rule checks (ERC). The tapeout is the final design stage for the IC before being sent for manufacturing. The tapeout is specifically the point at which the graphic for the photomask of the circuit is sent to the fabrication facility 812. The final output of the physical design process is usually a graphic design system (GDSII) or open artwork system interchange standard (OASIS) file, which is used for manufacturing by the foundry 812, along with various report files from the verification and sign-off such as final timing, power, and area reports, sign-off DRC reports, and/or LVS reports.

### 1.1. Don't Care-based Internal Net Connection and Transistor Removal

In digital circuit design, truth tables are used as a concise way to show the relationship between input and output signals for a logical circuit or Boolean function. Typically, a truth table is a tabular representation or other data structure that presents all possible input values or variables to a logical function or expression, such as a Boolean function, and their corresponding output values. Typically, truth tables have one column for each input variable (e.g., A and B), and a final column showing all of the possible results of the logical operation that the table represents (e.g., A XOR B, A NOR B, etc.). Each row of the truth table contains one possible configuration of the input variables, and the result of the operation for those values. The truth table for a particular circuit or subcircuit can be expanded to include columns for intermediate signals, such as internal nets to provide a more detailed view of the circuit's operation. In combinational logic, the state of input and output nets can be logic 0 or logic 1, which correspond to low voltage or high voltage, respectively. Additionally, the truth table of internal nets may also show an additional state called "don't care" ("DC" or "*") that may be considered when the net is not directly connected to either PWR (e.g., PWR = 1) or GND (e.g., GND = 0).

Fig. 2 shows an example NOR gate 200 in accordance with aspects of the present technology. This example includes a NOR gate 200 and corresponding truth table 250 (reproduced infra). In this example, the NOR gate 200 is embodied as a complementary metal-oxide-semiconductor (CMOS) NOR gate. However, it should be understood that the example embodiments can be straightforwardly applied to other types of transistor and semiconductor technologies, such as any of those mentioned herein, and/or other transistor and/or semiconductor devices.

The NOR gate 200 includes a set of p-channel metal-oxide-semiconductor (PMOS) transistors 202 (including PMOS 202A and PMOS 202B). The PMOS 202A and 202B are connected in series between the power supply (PWR) and the output terminal Z. The set of PMOS transistors 202 may also be referred to as a "pull-up network" and/or the like. The gate of PMOS 202A is connected to input terminal A, and the gate of the PMOS 202B is connected to input B. The source of PMOS 202A is connected to PWR (also referred to as "voltage" or "VDD" or the like), the drain of PMOS 202A is connected to the source of PMOS 202B, and the drain of PMOS 202B is connected to the output Z. An internal net (net0) is located at the point where the drain of PMOS 202A is connected to the source of PMOS 202B and serves as a transitional connection between the PMOS transistors 202A and 202B. The PMOS transistors 202 conduct when their gate inputs are low (logic 0). Both PMOS transistors 202A, 202B need to conduct simultaneously (e.g., when A = 0 and B = 0) to pull up the output node Z high (logic 1).

The NOR gate 200 also includes a set of n-channel metal-oxide-semiconductor (NMOS) transistors 204 (including NMOS 204A and NMOS 204B) connected in parallel between the output terminal Z and GND. The set of NMOS transistors 204 may also be referred to as a "pull-down network" and/or the like. The gate of NMOS 204A is connected to input A, and the gate of the NMOS 204B is connected to input B. The sources of both NMOS 204A and NMOS 204B are connected to GND (also referred to as "VSS" or the like), in parallel. The drains of both NMOS 204A and NMOS 204B are connected to the output Z, in parallel. The NMOS transistors 204 conduct when their gate inputs are high (logic 1). If input A or input B is high (logic 1), the corresponding NMOS transistor 204A, 204B conducts, pulling down the output Z to GND (logic 0).

During operation, when both inputs A and B are below a threshold voltage (e.g., logic 0), the NMOS transistors 204A, 204B are off (non-conducting) and the PMOS transistors 202A, 202B are on (conducting), pulling the output node Z to the PWR (logic 1). This condition provides an active pullup through the PMOS transistors 202A, 202B for the output Z of the NOR gate 200 with little to no competition from the NMOS transistors 204A, 204B. Thus, output Z = 1 when input A = 0 and input B = 0.

When one or both inputs A and B are at or above a threshold voltage (e.g., logic 1), NMOS 204A and NMOS 204B are on (conducting), and PMOS 202A and PMOS 202B are off (non-conducting), pulling the output Z to GND (logic 0). This is because the PMOS transistors 202 do not conduct if their corresponding input is high since PMOS transistors 202 require low inputs to conduct. Thus, output Z = 1 when input A = 1, input B = 1, or both input A = 1 and input B = 1. The input values and corresponding output values for NOR gate 200 are summarized by truth table 250. The truth table 250 also includes logical values at net0 for each input-output combination.

**Truth Table 250: NOR Gate 200**

| **A** | **B** | **net0** | **Z** |
|---|---|---|---|
| 0 | 0 | 1 | 1 |
| 0 | 1 | 1 | 0 |
| 1 | 0 | 0 | 0 |
| 1 | 1 | * | 0 |

In this example, net0 may be the only internal net that practically exists in the NOR gate 200 because all other nets are either PWR, GND, or output Z. As shown by table 250, when both inputs A and B are logic 0, then both PMOS 202A, 202B are conducting, and thus, net0 is shorted to PWR and will assume a logic 1 value. When input A is logic 0 and input B is logic 1, PMOS 202A is conducting and PMOS 202B is not conducting, and thus, net0 is shorted to PWR and will still have the value of logic 1. In the opposite case, PMOS 202A is closed and PMOS 202B is conducting, then net0 will be shorted to output Z, which in this case is results in a logic 0 value because one of the NMOS 204A, 204B is open and both will be shorted to GND.

When both inputs A and B are logic 1, net0 does not have a defined logical state, and therefore, net0 is in a DC state ("*"). In this state, there are respective resistances across PMOS 202A, 202B, PWR is logic 1, and the output Z is logic 0. Here, NOR gate 200 physically acts a voltage divider, and thus, net0 will have a value that is half of the PWR, which is an undefined state. Since the value of net0 does not affect the output Z, it is labeled as a DC ("*"). When net0 is in the DC state "*", it is surrounded by transistors in the off (logic 0) state, which means there is no highly conductive path either to PWR or to GND. This results in net0 having some value in between the low and high voltage thresholds, which cannot be clearly associated with either the on (1) or off (0) states.

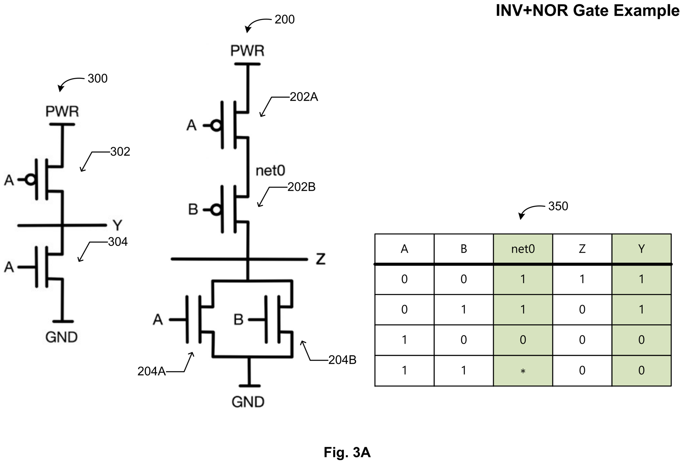

The nets in the DC state have no influence on the output Z of a gate because the output is, by design in CMOS technology, always connected by a high conductance channel to either PWR or GND. Therefore, if the NOR gate 200 is in the A = 1, B = 1 state then the output Z = 0 and net0 = *, then the net0 node can be shorted to either PWR or GND and the output Z would be unchanged. An example where such shorting is implemented is shown by Figs. 3A-3C.

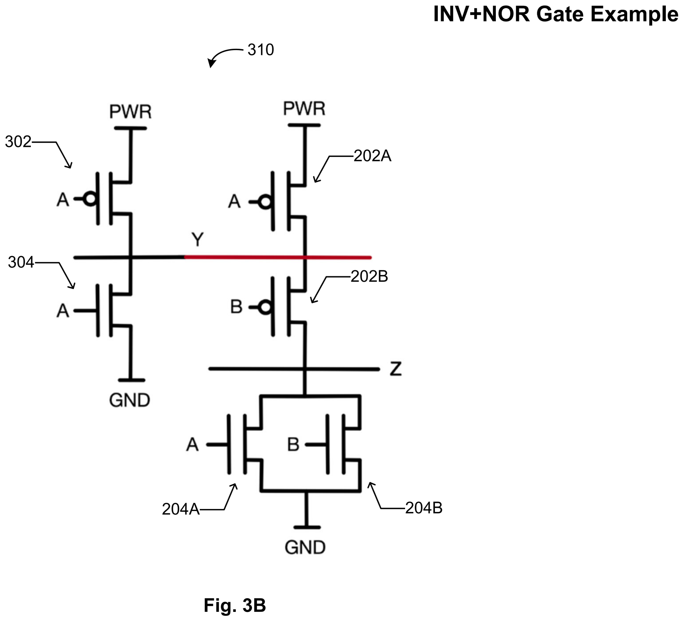

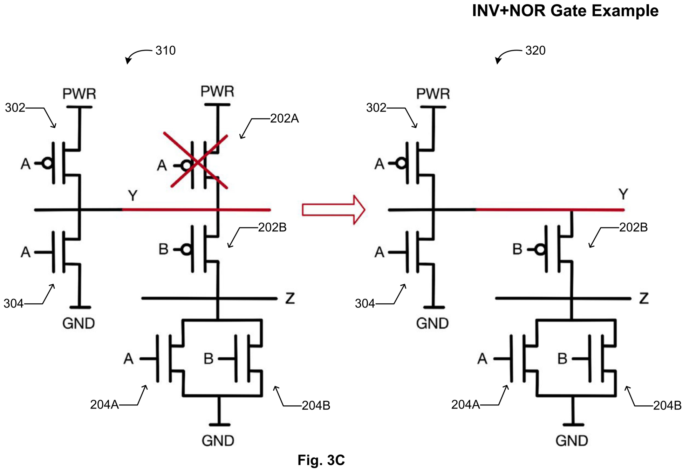

Figs. 3A, 3B, and 3C show an INV and NOR gate optimization example in accordance with the present technology. The example of Fig. 3A shows a NOR gate 200, INV 300, and corresponding truth table 350. The INV 300 includes two transistors 302 and 304 connected in series, each with input A, and an output terminal Y. In particular, a source of PMOS transistor 302 is connected to PWR, a drain of PMOS transistor 302 is connected to output Y. Additionally, a source of NMOS transistor 304 is connected to GND, and a drain of NMOS transistor 304 is connected to output Y. The gate of both transistors 302, 304 is connected to the input signal A, forming the basic CMOS inverter configuration, which inverts the value of input A. When input A is high, the NMOS transistor 304 conducts, pulling the output Y to GND (logic 0). When input A is low, the PMOS transistor 302 conducts, pulling the output Y to the supply voltage, PWR (logic 1). The input values and corresponding output values for INV 300 are summarized by truth table 340.

**Truth Table 340: INV 300**

| **A** | **Y** |
|---|---|
| 0 | 1 |
| 1 | 0 |

The truth table 250 of the NOR gate 200 and the truth table 340 of INV 300 may be combined to produce a combined truth table 350, which is shown by Fig. 3A and reproduced infra. Truth table 350 includes the input values and corresponding output values for NOR gate 200 and INV 300, as well as the logical values at net0 for each input/output combination.

**Truth Table 350: NOR Gate 200 + INV 300**

| **A** | **B** | **net0** | **Z** | **Y** |
|---|---|---|---|---|
| 0 | 0 | 1 | 1 | 1 |
| 0 | 1 | 1 | 0 | 1 |
| 1 | 0 | 0 | 0 | 0 |
| 1 | 1 | * | 0 | 0 |

As shown by truth table 350, the truth table 340 of the INV 300 with output Y *coincides* with the truth table 350 of net0 *up to* the DC value (*), which is/are highlighted in truth table 350. According to various embodiments, when comparing two nets and/or their truth tables, instead of requiring that they match perfectly across all input combinations, comparing up to DCs allows for flexibility in the DC conditions (*). Thus, if one net has a specific output (0 or 1) and the other has a DC (*) for the same input combination, the truth tables of those two nets are still considered equivalent for that input combination. For example, as shown by truth table 350, the output of net0 (i.e., "110*") has the same value as output Y (i.e., "1100") up to the DC (*). The DC value (*) in net0 may be considered to be the same as the corresponding value in the output Y, and thus, net0 may be considered to have the same truth table as output Y. Therefore, in various embodiments, the output of the INV 300 may be shorted with the net0 in NOR gate 200, as shown by circuit configuration 310 in Fig. 3B. Testing and simulations may be performed to verify that neither output Y nor output Z are changed in circuit configuration 310, for example, by running a logic simulator, a Spice circuit simulation, and/or the like.

Due to this DC-based netlist restructuring, an optimization opportunity can be realized where one of the PMOS transistors, such as PMOS 202A, can be removed to obtain the circuit configuration 320 shown by Fig. 3C. For instance, as shown by circuit configuration 310 in Fig. 3B, transistors 202A and 302 fulfill the same function. For example, transistors 202A and 302 short to PWR when input A is 0, and transistors 202A and 302 are turned off when input A is 1. Therefore, transistors 202A and 302 are two parallel identical transistors, and thus, one of the transistors 202A and 302 may be removed. Testing and/or simulations may be performed to verify that the truth table 350 for outputs Y and Z remains unchanged for circuit configuration 320, for example, by executing a logic simulator, a Spice circuit simulation, and/or the like to determine that circuit configuration 320 indeed works as intended. Although the example of Fig. 3C shows the transistor 202A being removed, it should be noted that in other implementations, transistor 302 could be removed from the circuit configuration 310.

It should also be noted that each of the circuit configurations discussed herein, such as circuit configurations 310, 320 discussed previously and/or circuit configurations 400, 410, 420, 500, 510, 520, 530, 600, 650 discussed infra, may also be referred to as a "circuit assembly", "circuit subassembly", "circuit arrangement", "circuit network", "transistor network", "network", "netlist", "subcircuit", and/or the like.

### 1.2. Satisfiability and Observability Don't Cares

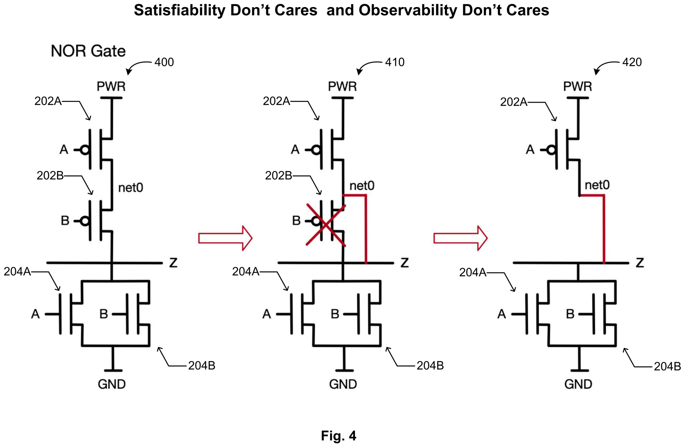

Fig. 4 shows an example of rearranging a circuit configuration based on satisfiability DCs (SDCs) in accordance with aspects of the present technology. Typically, an SDC refers to input conditions that can never occur due to the logical constraints of the system, meaning certain input combinations are impossible, and the corresponding output values do not matter. In some cases, an SDC may occur when certain input combinations do not arise due to limited controllability. Additionally or alternatively, SDCs may be denoted as the DCs of truth tables at the inputs of a transistor netlist, such as netlist 134, that can be computed from the logic surrounding the netlist. Here, the truth table entries, records, or rows of input combinations that never occur due to the specifics of the structure of the logic at the inputs may be denoted as an SDC.

For example, truth table 450 corresponds to the two-input NOR gate 400 in Fig. 4, which includes input A, input B, and output Z. The NOR gate 400 has the same circuit elements and configuration as NOR gate 200. However, in this example, the two-input NOR gate 400 never receives input pattern A=1 and B=0 because of the specifics of the structure of the logic at the inputs A and B. Therefore, the entry in truth table 450 for the input pattern A=1 and B=0, which in this example is the third row of table 450, is denoted as an SDC. In the example of table 450, the SDC is denoted by inserting the DC value (*) into each cell in the third row of table 450.

**Truth Table 450: NOR Gate 400 with ODC first row and SDC third row)**

| **A** | **B** | **Z** |
|---|---|---|
| * | * | * |
| 0 | 1 | 0 |
| * | * | * |
| 1 | 1 | 0 |

On the other hand, an observability DC (ODC) typically refers to conditions where the value of an internal signal or internal output is irrelevant because it cannot be observed by the primary outputs of the circuit, meaning the signal's value has no impact on the final output. In other words, an ODC may occur when the output of the netlist, such as netlist 134, does not propagate towards the global outputs because of the structure of the logic attached to its output. Here, the truth table entries, records, or rows of outputs that do not affect the global output due to the specifics of the structure of the logic at the output(s) may be denoted as an ODC.

For example, in truth table 450 corresponding to NOR gate 400, if the netlist output Z=1 does not propagate to the global output(s) of the IC, each cell in the row(s) in table 450 that corresponds to Z=1 can be denoted as an ODC. In this example, the first row in table 450 is the only row corresponding to Z=1, and therefore, each cell in the first row contains a DC value (*) to denote the ODC. In some examples, additional or alternative symbols may be used in truth tables to denote SDCs and/or ODCs such that the SDCs can be distinguished from the ODCs.

If both of the SDC and ODC from the previous examples apply, then it can be inferred that the NOR gate 400 can be replaced by a constant 0 wire, which may remove all four transistors from the overall IC design. For instance, as shown by truth table 450, the output Z is either a 0 or a DC, and therefore, the entire NOR gate 400 can be replaced by a wire with a constant logic 0 signal. This is a general technique that can be applied to all circuits. However, additional or alternative optimization opportunities can be achieved via internal net connections. The act of connecting two or more nets may be referred to as "net merging".

For example, assume that truth table 455 corresponds to NOR gate 400 in Fig. 4. In this example, NOR gate 400 does not have an ODC, but does have an SDC for the input pattern A=0 and B=1, as shown by the second row in truth table 455. Here, net0 is equal to output Z up to DCs, as shown by the highlighted columns in truth table 455. If net0 and output Z are connected, it can be seen that the PMOS 202B becomes superfluous, as shown by circuit configuration 410 in Fig. 4. Therefore, PMOS 202B is removed from the circuit, as shown by circuit configuration 420 in Fig. 4.

**Truth Table 455: NOR Gate 400**

| **A** | **B** | **net0** | **Z** |
|---|---|---|---|
| 0 | 0 | 1 | 1 |
| * | * | * | * |
| 1 | 0 | 0 | 0 |
| 1 | 1 | * | 0 |

It should be noted that the circuits based on optimized transistor netlists according to the embodiments discussed herein should not be used outside of the context where SDC(s) and/or ODC(s) is/are determined. In this example, such a context would involve a scenario where the input pattern A = 0 and B = 1 can be received at circuit configuration 420 because, in such a scenario, PWR and GND would be shorted.

For instance, glitches may occur when input signals arrive at the input terminals at different times than expected or intended, thereby resulting in one or more transistors or other circuit elements being activated or shut off. In the example of Fig. 4, such glitches could result in input pattern A=0 and B=1 being supplied to circuit configuration 420. To avoid such glitches, simulations, such as Spice simulations or other glitching simulation models, may be run to ensure that such glitches do not occur often or at all. Additionally or alternatively, timing optimization embodiments discussed infra can be used to address glitching behavior.

### 1.3. Timing Optimization and Conditional Connections

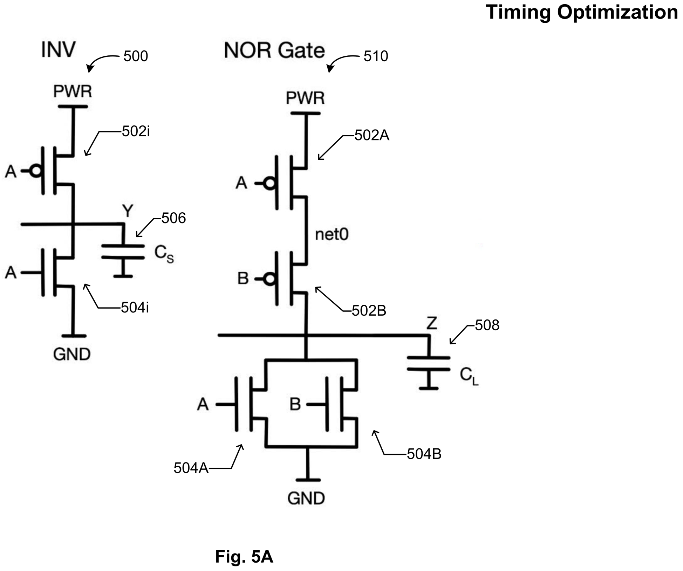

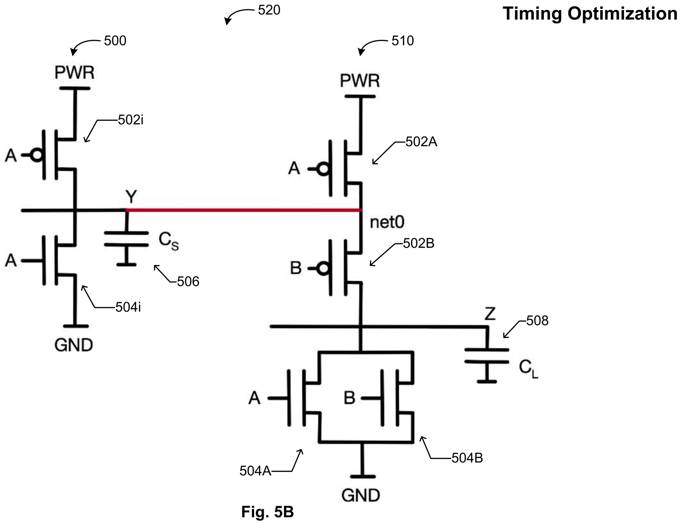

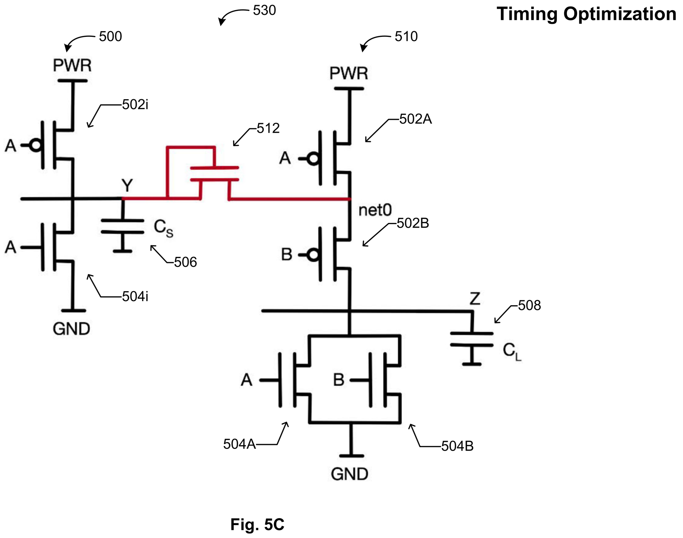

Figs. 5A, 5B, and 5C show an example of rearranging a circuit configuration for timing optimization in accordance with aspects of the present technology. The examples of Figs. 5A-5C consider a scenario where there are two nets that are equal up to DCs that participate in driving two different loads with potentially different drive strengths. In this case, a connection can be made between those nets to improve the drive strength and share the relatively large load.

The example of Fig. 5A shows an INV 500 and NOR gate 510. The INV 500 includes two transistors 502i and 504i connected in series, each with input A, and an output terminal Y connected to a capacitor (C_{S}) 506. In particular, a source of PMOS transistor 502i is connected to PWR, a drain of PMOS transistor 50i2 is connected to output Y, a source of NMOS transistor 504i is connected to GND, and a drain of NMOS transistor 504i is connected to output Y. The gate of both transistors 502i, 504i is connected to the input signal A, forming the basic CMOS inverter configuration. When input A is high, the NMOS transistor 504i conducts, pulling output Y to GND (logic 0). When input A is low, the PMOS transistor 502i conducts, pulling the output Y to the PWR (logic 1). The C_{S} 506 is connected between the output node Y and GND. The C_{S} 506 acts as a load capacitor for the INV 500, representing parasitic capacitance or intentional capacitance placed at the output node. The C_{S} 506 influences the speed and transient behavior of the INV 500. Specifically, the time it takes for the output to transition between high and low states is affected by the charging and discharging of the C_{S} 506 through the transistors 502i, 504i. The transistors 502i, 504i act as switches, controlling whether the output node Y is connected to PWR or GND, depending on the input A. The C_{S} 506 represents the capacitive load at the output Y, which is charged or discharged when the transistors 502i, 504i switch states, affecting the propagation delay and switching speed of the INV 500.

The NOR gate 510 includes PMOS transistors 502A, 502B, NMOS transistors 504A, 504B, and a capacitor (C_{L}) 508. In this example, the NOR gate 510 includes two PMOS transistors 502A and 502B connected in series between PWR and the output terminal Z, and two NMOS transistors 504A and 504B connected in parallel between the output terminal Z and GND. Specifically, the source of PMOS 202A is connected to PWR, the drain of PMOS 502A is connected to the source of PMOS 502B, and the drain of PMOS 502B is connected to the output Z. The internal net (net0) is located at the point where the drain of PMOS 502A is connected to the source of PMOS 502B and serves as a transitional connection between the PMOS transistors 502A and 502B. The gate of PMOS 502A is connected to input terminal A and the gate of PMOS 502B is connected to input terminal B. The sources of both NMOS 504A and NMOS 504B are connected to GND, in parallel. The drains of both NMOS 504A and NMOS 504B are connected to the output Z, in parallel. The gate of NMOS 504A is connected to input A and the gate of NMOS 504B is connected to input B.

If either input A or B is high (logic 1), the corresponding PMOS transistor 502A, 502B will be off, preventing the output node Z from being connected to PWR. Both PMOS transistors are on when both inputs A and B are low (logic 0) to pull the output Z high (logic 1). If either input A or B is high (logic 1), the corresponding NMOS transistors 504A, 504B will conduct, pulling the output node Z low (logic 0). In other words, the output Z is only high (logic 1) when both inputs A and B are low (logic 0); otherwise, the NMOS path pulls the output Z to GND.

The C_{L} 508 is connected to the output node Z, representing the load capacitance at the output Z of the NOR gate 510. This could be due to parasitic capacitance or intentional design, and it affects the performance of the gate. The C_{L} 508 is charged or discharged depending on the switching state of the transistors 502A, 502B, 504A, 504B. When both PMOS transistors 502A, 502B are on, the C_{L} 508 is charged through the PMOS network, pulling the output Z high (logic Z). When either NMOS transistor 504A, 504B is on, the C_{L} 508 is discharged to GND, pulling the output Z low (logic 0). The C_{L} 508 influences the propagation delay and timing characteristics of the NOR gate 510. The speed at which the output Z transitions from high to low, or vice versa, may be based on how quickly the C_{L} 508 charges or discharges. The C_{L} 508 represents the load at the output node Z and affects how quickly the output can change states (either by charging through the PMOS transistors or discharging through the NMOS transistors), influencing the gate's overall speed and response time.

As an example, assume that the NOR gate 510 is driving a large load C_{L} 508 and the INV 500 is driving a small load C_{S} 506 such that C_{L} >> C_{S}. Additionally, the nets Y and net0 share the same truth table up to DCs in this example, so the corresponding truth tables may be connected (not shown). The term "small load" may refer to a circuit element, such as C_{S} 506, being attached to another relatively small circuit element, such as a small transistor, capacitor, resistor, resistor-capacitor (RC) network, resistor-inductor-capacitor (RLC) network, and/or the like. Additionally, the term "large load" may refer to a circuit element, such as C_{L} 508, being attached to another relatively large circuit element, such as one or more large transistors, capacitors, resistors, RC networks, RLC networks, and/or the like. For example, the large load C_{L} 508 may have a large fan out and be connected to 5 or 6 additional cells. In this example, C_{S} 506 may have a relatively low capacitance value, which may result in faster charging and discharging times, at least in comparison with the large load C_{L} 508. Thus, a relatively smaller amount of voltage and/or current may be needed to turn on cell(s) downstream of C_{S} 506 (not shown). Additionally, C_{L} 508 may have a relatively high capacitance value, which may increase the charging and discharging time, at least in comparison with the small load C_{S} 506. Thus, a relatively larger amount of voltage and/or current may be needed to turn on cell(s) downstream of C_{L} 508 (not shown).

Since the NOR gate 510 drives the large load, it may be advantageous to improve the drive strength at output Z. Here, the "drive strength" may refer to conductivity and/or charging/discharging time, and thus, improving drive strength at output Z may refer to increasing the ability of NOR gate 510 to conduct, to charge and/or discharge C_{L} 508, and/or provide more voltage/current to other loads connected to the output Z and/or C_{L} 508.

In some cases, the drive strength may be determined by the PMOS transistors 502A, 502B that are in the path between PWR and output Z. As alluded to previously, both PMOS transistors need to conduct simultaneously (e.g., when A = 0 and B = 0) to pull up the output node Z high (logic 1). Here, if the voltage from PWR is increased (e.g., going from logic 0 to logic 1), the PWR is connected to output Z and the current will flow from PWR through the two PMOS transistors 502A, 502B. In this case, the largest resistances are the two PMOS transistors 502A, 502B, and therefore, according to Ohm's law, eliminating or reducing the resistance of the pull up network (including PMOS transistors 502A, 502B) may result in more current flowing at the same voltage. Additionally, when input A and/or B is high (logic 1), then the output Z will be pulled down to GND. However, according to Ohm's law, because the NMOS transistors 504A, 504B are in parallel, the resistance of the pull down network (including NMOS transistors 504A, 504B) is likely to be smaller than the resistance of the pull up network.

As mentioned previously, the nets Y and net0 share the same truth table up to DCs in this example, allowing their corresponding truth tables to be combined or connected (not shown), and allowing at least one internal net from each subcircuit to be connected. Thus, as shown Fig. 5B, the nets Y and net0 may be connected to form circuit configuration 520. Here, INV 500 and NOR gate 510 may be considered subcircuits of circuit configuration 520. At the INV 500, when input A is high (logic 1), the PMOS 502i is off (non-conducting) and the NMOS 504i conducts pulling the output Y to GND (logic 0). When input A is low (logic 0), the NMOS 504i is off (non-conducting) and the PMOS 502i conducts pulling the output Y to PWR (logic 1). At the NOR gate 510, a high output (Z = 1) is produced only when both inputs A and B are low (logic 0). If either input A or B is high (logic 1), the NMOS transistors will conduct, pulling output Z to GND (logic 0), overriding the pull-up network. The inverter inverts the input A, and its output Y directly affects net0. For instance, if input A is high (logic 1), then the output Y is low (logic 0), influencing the pull-up network (PMOS 502A, 502B) at the NOR gate 510. If input A is low (logic 0), then the output Y is high (logic 1), which pulls net0 high (logic 1). When output Y is high (logic 1), such as when input A = 0 in the INV 500, net0 is high (logic 1), which helps the PMOS 502A, 502B in the NOR gate 510 conduct, allowing them to pull output Z to a high state.

By connecting the nets Y and net0, the PMOS 502i of the INV 500 helps drive the load at output Z, and the charging of C_{L} 508, in NOR gate 510. This is because the load at the INV 500, such as C_{S} 506, is relatively small, and thus, most current through the PMOS 502i of the INV 500 will help drive the larger load at output Z, such as C_{L} 508. For example, connecting net Y and to net0 may slow down the loading/charging speed of C_{S} 506, and may increase the loading/charging speed of C_{L} 508. Thus, C_{S} 506 will be charged relatively quickly in comparison to the charging time of C_{L} 508. In one example, C_{S} 506 may have a 100 picosecond (ps) charging time, and C_{L} 508 may have a 500 ps charging time. When C_{S} 506 is charged, the PMOS 502i of INV 500 can now provide current to C_{L} 508 at output Z. During operation, the charging of capacitors 506, 508 is not a step-by-step process, and both capacitors 506, 508 may be charged at the same time where C_{S} 506 will reach its capacity before to C_{L} 508 reaches its capacity. When C_{S} 506 is charged, PMOS 502i will help drive the load at output Z, such as C_{L} 508.

An effect of connecting net Y and net0 as in circuit configuration 520 in Fig. 5B is that the charging/loading times of capacitors 506, 508 is somewhat equalized in comparison to the circuit arrangement shown by Fig. 5A. One downside of this approach is that the charging time of the load at C_{S} 506 is slowed down. However, in some cases, it is desirable to avoid the slowdown of the charging time while still achieving a boost to a timing path. In such cases, a timing path of the circuit can be conditionally boosted by inserting a pass transistor into the circuit. The act of inserting conditional aspects into a circuit arrangement may be referred to as "conditional net merging".

Fig. 5C shows an example circuit configuration 530 in which a pass transistor 512 is used to conditionally boost a timing path. Here, INV 500 and NOR gate 510 may be considered subcircuits of the circuit configuration 530. As mentioned previously, output Y = 0 when input A = 1 and output Y = 1 when input A = 0. The Y signal is fed into the NOR gate 510 at net0, which affects the PMOS 502A, 502B. When Y = 1, which occurs when A = 0 at INV 500, net0 is at a high voltage (logic 1), which may turn off one of the PMOS 502A or 502B, affecting how the NOR gate pulls output Z high. The pass transistor 512 is disposed between the output Y of INV 500 and net0 of NOR gate 510. The pass transistor 512 turns on or off the path between its drain and source depending on the voltage at its gate, which is influenced by the output Y of INV 500. Depending on the signal applied to the gate of the pass transistor 512, the pass transistor 512 either allows or blocks the connection between Y and net0.

In this case, the pass transistor 512 between net Y and net0 helps drive the rising edge of net0 (e.g., pulling net0 high) via a conditional connection. When the pass transistor 512 is off (logic 0) it does not conduct, and the NOR gate 510 and the INV 500 may operate independently. When the pass transistor 512 is on (logic 1) it becomes conductive, creating a connection between net Y and net0. Here, the pass transistor 512 becomes conductive when net Y passes its threshold voltage (logic 1). Thus, when the pass transistor 512 is on (logic 1), the pass transistor 512 provides a conducting path from PMOS 502i to C_{L} 508. During operation, C_{S} 506 will charge relatively fast when the pass transistor 512 is off. When C_{S} 506 is mostly (or completely) charged, then the pass transistor 512 opens and helps drive the load at C_{L} 508. Thus, during the operation of circuit configuration 530, C_{S} 506 may first charge mostly and then the PMOS 502i helps drive C_{L} 508 whose timing may improve. In this way, the pass transistor 512 effectively acts like a diode. This could be advantageous if the output Y is attached to a timing critical path, which would be non-desirable if slowed down too much. A downside to this approach is that it involves adding an additional transistor, such as transistor 512. However, depending on the application, the added costs in terms of chip area may be may be worth shaping the timing arcs in a way that could be globally advantageous.

The exact configuration of the pass transistor 512 may depend on how the timing arcs should be shaped. For example, the choice between using NMOS or PMOS transistors and/or where the gate is connected may influence the behavior of the timing arcs. In the example of Fig. 5C, the gate of pass transistor 512 is connected to the drain of the pass transistor 512. However, in other implementations, the gate of the pass transistor 512 could be connected to an input, such as input A or input B.

### 1.4. Additional and/or Alternative Optimizations

In addition to transistor count reduction and timing optimization, additional or alternative optimizations may be used based on, for example, performance metrics. The performance metrics may include power, performance, and area (PPA) metrics and/or the like. In some cases, such optimizations may take place after transistor placement 116 and/or after routing 124. In these cases, a placement and routing optimizer can be executed on a netlist, such as transistor-level netlist 134, and subsequently performance evaluations may be performed on such netlists.

Restructuring a netlist, such as transistor-level netlist 134, based on DCs may improve chip area based on removal of one or more transistors from the netlist. However, performance metrics of a restructured netlist may not necessarily be improved even when transistors are removed from the netlist. Additionally, in some cases, the placement area may remain constant even when transistors are removed because the removed transistors do not allow for more diffusion sharing. In other cases, timing or power metrics could get worse. However, DC-based restructuring provides more opportunities to express the same functionality in different way, which could lead to an overall improvement in performance even when no transistors are removed. Aspects of the present technology include enhanced diffusion sharing, which can improve chip area without transistor removal.

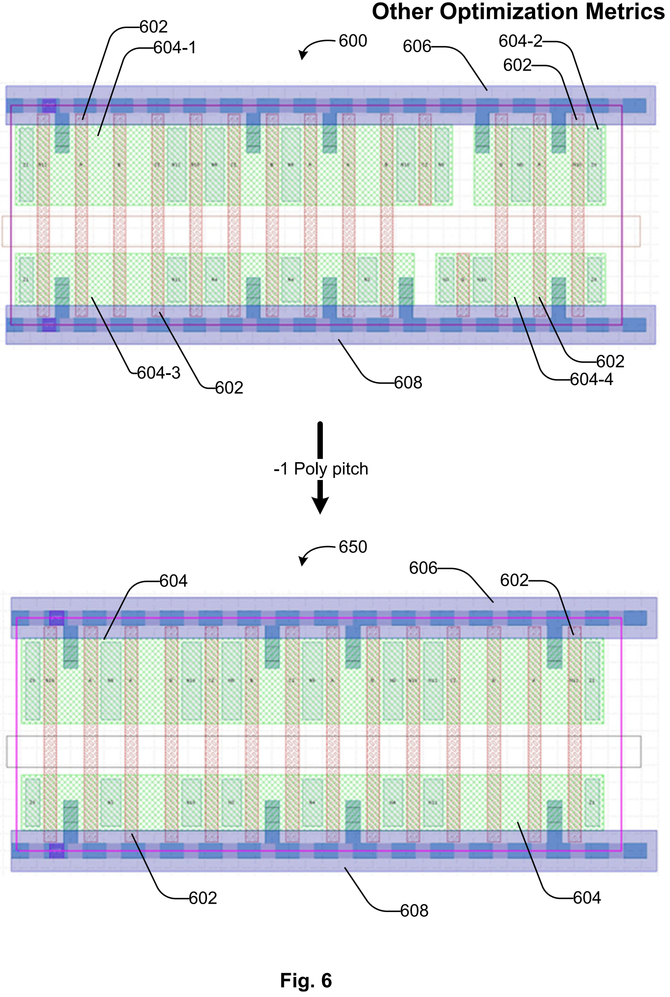

Fig. 6 depicts example full adder layouts 600 and 650 in accordance with aspects of the present technology. The full adder layouts 600 and 650 may be IC layouts, such as IC layout 140 of Fig. 1. The full adder layout 600 includes a set of polysilicon (poly) gates 602, diffusion regions 604, power rail 606, and ground rail 608. Note that not all gates 602 and contacts 606 are labeled in Fig. 6. The poly gates 602 may represent control gates of individual transistors, the diffusion regions 604 may represent the source and drain regions of one or more transistors.

Diffusion sharing is a layout optimization technique where adjacent transistors share a common diffusion region to reduce area, routing congestion, and parasitic capacitance. Non-diffusion shared nets may require routing resources. In the examples of Fig. 6, all diffusion regions between two poly-gates are shared between neighboring transistors, which in layout 600 may include, for example, diffusion region 604-3 The source and drain regions of transistors are formed by implant and thermal diffusion of dopants into a substrate. When two adjacent transistors are connected in a way that allows their source or drain regions to be the same (e.g., sharing a common node), diffusion sharing enables these regions to overlap, reducing the overall silicon area required and minimizing parasitic capacitance between transistors. For example, if the sources/drains of two or more transistors have the same net, then those two or more transistors can be merged together to share the same diffusion region 604. This results in smaller circuit layouts and improved performance in some cases. In the example of layout 600, all transistors share diffusion regions, except for terminals at the boundaries and those adjacent to gaps between regions 604-1, 604-2, 604-3, and 604-4. Thus, some implementations include gap counting. Some implementations include gap counting, where a counter may be implemented to count the number of available spaces for transistor placement at runtime. Additionally or alternatively, some implementations include diffusion share counting, where a counter may be implemented to count the number of available diffusion spaces at runtime. These gap and/or diffusion share counting processes may take place during the placement stage 116 in the physical design stage 110. In some examples, the gap and/or diffusion share counting processes may be satisfiability (SAT) encoding optimizations, which may involve implementing SAT solvers, satisfiability modulo theories (SMT) solvers, mixed integer programming (MIP) solvers, and/or other solvers to perform such optimizations.

The full adder layout 650 represents the result of the full adder layout 600 that went through DC-based restructuring that did not result in transistor removal. However, the DC-based restructuring allowed for reduction in the poly pitch by one because the restructured netlist allows for optimal diffusion sharing. Poly pitch is the distance between the centers of two adjacent polysilicon gates 602. In the example of layout 650, the DC-based transistor restructuring allowed more transistors to be connected to one another resulting in more diffusion sharing than in the layout 600. Therefore, the DC-based transistor restructuring in this example allows the layout 650 to be more compact than layout 600.

In some instances, restructuring netlists may also result in changing transistor pin locations, which could potentially lead to different routing problems. However, in these cases, it may be possible to route a previously unrouteable design.

### 1.5. Transistor Reordering

In some implementations, the order of transistors may be irrelevant for the logic function of a circuit. However, the order of transistors may matter for performance evaluation. The order of transistors may not matter in terms of the logic if the transistors are connected in series. For example, in a NOR gate, such as NOR gate 200, 400, and/or 510, the position of PMOS transistors, such as PMOS 202A, 202B and/or PMOS 502A, 502B, may be swapped. In these cases, tracking the different possible orderings, arrangements, and/or configurations can result in more opportunities for DC-based optimization, as well as more opportunities to achieve the best possible power, performance, and area.

### 2. Example Methods

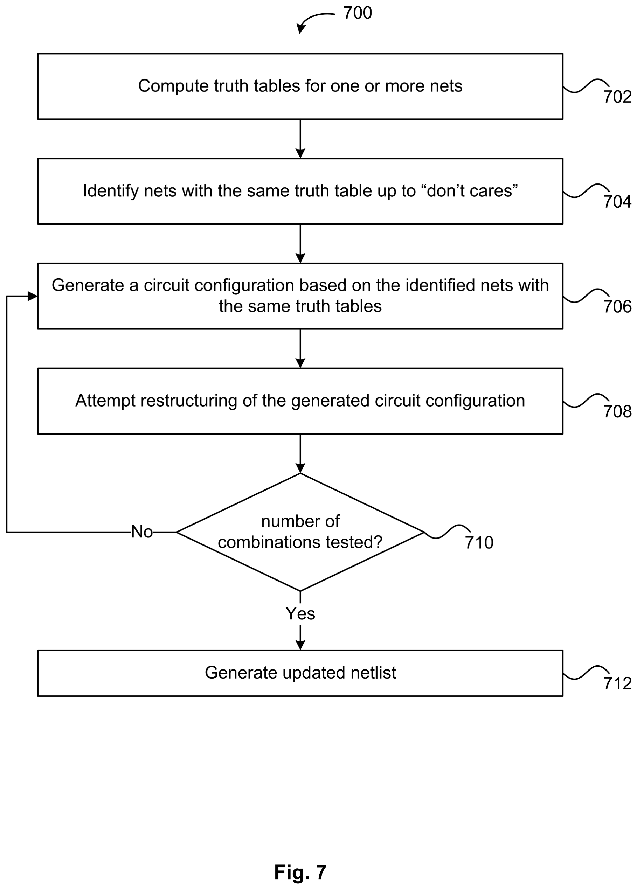

Fig. 7 shows an example transistor-netlist optimization process 700, which may be performed using a suitable EDA tool operated by a computing device, such as any of the computing systems 802, 804, 806 of Figs. 8-9. Process 700 begins at operation 702 where the computing device computes truth tables for one or more (or all) internal nets of a given circuit design, including DCs. As an example, truth tables may be computed or determined by setting the gate voltages of a transistor network to identify or determine the conductivities of all transistor source-drain-connections. To determine whether a net is a 1, 0, or DC, PWR and GND may be propagated through the network to determine whether PWR or GND is connected to the net for a particular input pattern. The net has a value of 1 when PWR is connected to the net. The net has a value of 0 when GND is connected to the net. The net has a DC when neither PWR nor GND are connected to the net. A net with both PWR or GND are connected to the net causes a PWR-GND short, which indicates that a mistake or error has occurred. In some implementations, the truth tables can be computed using a logic simulator that treats transistor channels (e.g., the connection between source and drain) as perfectly conducting when the transistor is turned on and as perfectly insulating if the transistor is turned off. When an input is applied to the transistor network, it can be determined which nets are connected to PWR (i.e., logic 1), which nets are connected to GND (i.e., logic 0), and which nets are unconnected (i.e., DCs). The output for each net, or the voltage at or across each net, for all input combinations can be represented as a truth table and/or a binary vector.

At operation 704, the computing device identifies or determines nets, such as internal nets, with the same truth table up to DCs. Here, the same truth tables may be truth tables with matching or equivalent values up to DCs. For example, two truth tables may be considered the same or equivalent if they produce the same outputs for all relevant input combinations. Two nets may be considered the same or equivalent up to DCs if the outputs of their truth tables match for all input combinations, except for any inputs designated as DCs. Therefore, the inputs defined as a DC may be ignored when comparing two or more truth tables. In some implementations, at least two nets having the same truth tables up to DCs may be combined into a single truth table. Additionally or alternatively, a collection or list of nets having the same truth tables up to DCs may be produced. This collection or list can comprise a set of entities where each entity contains net identifiers (IDs) corresponding to each net that has the same truth table up to DCs. The entities may be in the form of pairs, n-tuples (where n is an integer), key-value-pairs, lists, arrays, dictionaries, tags, sequences, vectors, tensors, containers, records, structs, and/or some other type of data structure(s). In some aspects of the present technologies, one or more heuristics may be formulated to identify or determine matching truth tables based on the inputs applied to the gates of transistors from the net to the power rail, as discussed previously in the INV+NOR example of Figs. 3A-3C.

In some implementations, the nets that have the same truth table can be identified or determined modulo DCs. A modulo DC may refer to input combinations that produce outputs that are equivalent under modulo arithmetic. Comparing truth tables modulo DCs may involve removing rows of the truth tables where a DC occurs in at least one of the truth tables being compared, and then performing an equality check. Here, two nets or two truth tables may be considered equivalent if their outputs are congruent modulo the chosen value for all input combinations, after the removal of the DC(s). If the outputs of both nets produce the same result under the modulo operation, they are considered equivalent for that input combination.

At operation 706, the computing device generates a circuit configuration based on the identified nets. In one example, operation 706 may involve connecting at least two nets with the same truth tables up to DCs. In other words, operation 706 may include one or more net merging operations. For example, based on the collection of nets from operation 704, the computing device can attempt to connect nets having the same truth tables up to DCs. These nets may belong to subcircuits (e.g., logic gates, cells, macros, etc.), and connecting the nets may result in a circuit configuration including those subcircuits. Subsequently, the computing device can attempt to remove one or more transistors from the combined circuit configuration and/or add conditional transistor(s) to the combined circuit configurations at operation 708. In another example, operation 706 may involve reordering at least some transistors in a given circuit configuration, which may or may not include connecting the at least two nets with the same truth tables up to DCs.

At operation 708, the computing device attempts restructuring of the circuit configuration based on, for example, the DCs in the connected or combined truth tables. For example, the restructuring can include removing superfluous transistor(s) from the circuit configuration, adding one or more transistors to the circuit configuration, and/or reordering or rearranging the position and/or orientation of one or more transistors in the circuit configuration. For example, the removal of superfluous transistor(s) may involve splitting the transistor network where the net connection happened and attempting to remove the transistor(s) relatively close to either PWR or GND, depending on whether it is a PMOS or NMOS network, respectively. Adding transistor(s) may involve adding a transistor, such as a conditional transistor, between two stages of the circuit configuration to speed up the charge of a signal, and/or potentially an output. Additionally or alternatively, adding transistor(s) may involve connecting a transistor between a pair of nets in which one net in the pair must not be unconnected in any input state. Furthermore, the reordering can include rearranging at least one transistor with respect to at least one other transistor in the circuit configuration. This can include changing the position and/or orientation of a transistor based on area of the circuit configuration, chip area, diffusion sharing, poly pitch, rearranged pin locations, rearranged routing, and/or the like.

After each attempted restructuring of the circuit configuration, the transistor network may be (re)simulated to verify that the truth table, or at least the output, is unchanged. In some implementations, it may not be necessary to (re)simulate the entire network. Instead, the dependencies of the netlist can be statically determined, and only parts of the network that are affected by the reconfigured, rearranged, or changed circuit elements are (re)simulated.

At operation 710, the computing device determines if a number of combinations have been tested and/or simulated. For example, the number of combinations that are to be tested may be configured to be all possible combinations or may be set to a predefined number of iterations. If the number of combinations have not been tested and/or simulated, the computing device proceeds back to operation 706 to combine more nets having the same truth tables up to DCs. If the number of combinations have been tested and/or simulated, the computing device proceeds to operation 712 to generate an updated netlist, for example, a reduced sized netlist, based on the combined nets. In this way, operations 706 and 708 are repeated until all possible combinations or the predefined number of combinations have been attempted prior to revising the netlist at operation 712.

### 2.1.1. Net Merging Aspects

In some embodiments, operation 702 can additionally or alternatively include computing expanded truth tables (also referred to as "extended truth tables" or the like) to cover nets, such as internal nets. In these embodiments, the expanded truth tables record or otherwise include two additional states: a DC state and a PWR-GND short state, which is also referred to herein simply as a "short state". As alluded to previously, the DC state indicates that a net is not connected to either PWR or GND, while the short state indicates that the net is connected to both PWR and GND. Thus, as an example, the extended truth tables may include the following values for each net: 0, 1, D, S, where "D" represents the DC state and "S" represents the short state. In some implementations, each input state and/or each net may be represented in the expanded truth table using two bits. For instance, to compute the DC and short states for each net, each net may contain two bits for each input state including: a first bit that indicates whether the net is connected to PWR, and a second bit that indicates whether the net is connected to GND. As an example, a value of "00" may represent the DC state, a value of "01" may represent a high state (logical 1), a value of "10" may represent a low state (logical 0), and a value of "11" may represent the short state.

Additionally or alternatively, each truth table may be represented as a vector of integers. In one example, each truth table vector may be a 64 bit vector having 2*^{N}* rows, where *N* is the number of inputs. The truth table may be written in ascending order, such that each row is written from the lowest bit to the highest bit. If the truth table requires more than 64 bits, then the truth table may be extended to another integer until the value for all the rows is stored properly.

In some embodiments, operation 702 and/or 704 can additionally or alternatively include computing all nets in the netlist, including all internal nets. In some examples, internal nets may be nets or nodes inside logic gates and/or other circuit elements. In some implementations, the following elements related to each transistor in a netlist can be considered: transistor type (e.g., PMOS or NMOS, or the like), gate net, source net, and drain net. In some cases, the source net and drain net are indistinguishable.

In some embodiments, operation 702 and/or 704 can additionally or alternatively include creating channel-connected regions (also referred to as "channel-connected components", "clusters", or the like) to avoid performing simulations at random points. A channel connected region is a set of transistors that are connected through their source/drain contacts and/or are connected to a primary output or a gate. The region is delineated by PWR and GND, which connect all the channel connected regions together. The channel-connected regions may be created and then sorted topologically.

To create a channel-connected region, the process may start for each net that is connected to a gate or is an output. Then, for each net, a flood fill algorithm may be used through the transistors up to PWR or GND. A flood fill algorithm is a technique used in computer graphics and image processing to determine and fill connected regions of a grid, image, matrix, graph, tree, or other data structure with a particular color or value, starting from a specific point, which is often referred to as a seed point. In some implementations, the flood fill algorithm does not go through gates. All nets found via the flood fill algorithm may be contained in a single channel-connected region. While performing the previous iteration, every time a transistor is passed through, the nets in each gate may be saved or recorded to determine which channel-connected regions need to be computed before the current one. This may be done to determine the dependency of channel-connected regions on each other when signals propagate from the primary inputs to the primary outputs. Here, "the previous iteration" refers to the process of using the flood fill algorithm to find all the channels connected region.

Sorting may involve identifying the channel-connected regions and all the channel-connected regions that need to be computed before a present channel-connected region. The channel-connected regions that need to be computed before a present channel-connected region may be computed in the simulation sense that an input vector propagates from the primary input to the primary output. Determining channel-connected regions can be done in any order but simulating the circuit requires knowledge of the topological order of the graph of channel-connected regions. At this point, the present channel-connected region, and channel-connected regions that need to be computed before the present channel-connected region, may be in a graph that is to be reduced to a tree structure. Additionally, all loops may be combined into a bigger channel-connected region where all nets in the bigger channel-connected region will be computed at the same time. This results in groups of nets to be computed and their order. Thus, by going through the steps/operations mentioned previously, the way in which the nets are grouped and the order to compute the truth table(s) for each group can be identified or determined. In other words, after all the channel-connected regions (clusters) are sorted, the truth tables may be computed for the nets associated with each channel-connected region (cluster) in the sorted order. This sorted order makes sure that when one channel-connected region (cluster) is being evaluated, it has all the information that is needed for the truth table computation.

Computing the truth table on all nets may involve computing all possible inputs at once, channel-connected region by channel-connected region, respecting its topological order. Starting from GND and PWR, a queued-based flood fill algorithm may be used, in which the last recently updated net is expanded. For each net, a simulation may be performed to determine how that net will influence the adjacent nodes throughout the transistors, which is updated accordingly and then added to the queue if it has changed.

In some embodiments, operation 706 can additionally or alternatively include attempting to connect each pair of nets to one another and determining whether the connection does or does not create a short (i.e., being connected to GND and PWR at the same time for any state). For each pair of nets that does not create a short, then those nets can be connected without changing the output of the circuit. The act of connecting two or more nets may be referred to as "net merging".

For each pair of nets (net merging), one or more of the following can be attempted: connecting the nets, removing adjacent transistors, checking whether a new netlist is valid and keeps the same output, and if so, reducing the number of transistors.

In some embodiments, operation 706 and/or 708 can additionally or alternatively include, for each target net, such as high capacitance outputs, conditional net merging may be performed. For example, when a pair of two nets is identified from a truth table in which at least one of the nets must not be unconnected in any input state, a transistor may be introduced in which the gate net is a special net chosen from the truth table and the other two nets are the target and the non-special nets from the truth table. Additionally, after the transistor is introduced, it can be checked whether there is a short created and if it actually produces something. Then, a time simulation can be performed to check whether the conditional net merging produced an improvement or not.

In some embodiments, operations 706 and/or 708 can additionally or alternatively include placement-driven netlist restructuring. The placement-driven netlist restructuring makes changes on a transistor-level netlist, such as transistor-level netlist 134, in a way to assist a placer by providing a source net (PWR or GND) and an internal net that could substitute it on a determined transistor. By doing that, the average size of Euler paths can be increased thereby reducing the area used to place all transistors. This may be referred to as "placement net merging". This may involve detaching all of the PWR and GND connections from a transistor and replacing those connections with a new net related to that transistor. A simulation may then be performed from the gate/output net towards a temporary GND and PWR sources. These new nets can then be used on net merging. Note that the new GND/PWR is the effectiveness of that GND/PWR related to the gate/output net, which means, it is connected on the new truth table if and only if the gate/output related net are also connected to GND/PWR. By performing placement net merging and validating the results, the possibility for placement can be increased, reducing the minimum area of the IC.

### 2.1.2. Heuristics

Checking the truth tables of internal nets to find equivalent truth tables and/or equivalent internal nets of a circuit design can be a time consuming and/or resource intensive process. Therefore, the example transistor count optimization process 700 may be modified using one or more heuristics to reduce the execution time and/or resource consumption for transistor synthesis optimization.

For example, given a transistor-level netlist, such as netlist 134, one or more sets of transistors may be grouped together such that all the channel connected transistors belong to a single group. The groups of transistors may be the same or similar as the aforementioned channel-connected regions. For the groups of transistors where there is only one path from PWR (VDD) and/or GND (VSS) to the output, if multiple groups share the same input on either the pull-up or pull-down path, then the internal nets associated with that input can be merged with proper reordering. In addition, if the output of an inverter, such as INV 300 or 500, becomes an input of a gate, such as NOR gate 200 or 510, with a single branch at the next stage, then these two nets can be merged with proper net reordering.

For a first embodiment it is assumed that each group of transistors (channel-connected region) has *N* inputs and one output (*N-*input, 1-output), where *N* is an integer. In the first embodiment, for each group, the computing device may check if there is only one path from PWR (VDD) and/or GND (VSS) to the output. If yes, the computing device looks at all the transistors connecting two adjacent nets on the path, then creates a hashmap in which the key is a sorted list of the gate inputs of those transistors and the value would be the primary output net of this group. This may be done for pull-up and pull-down paths separately. After all of the groups are processed, if some keys are mapped to multiple values, then those segments can be merged given that the segments can be reordered so that the segments to be merged are reordered to be connected to VDD/VSS.

For a second embodiment it is assumed that each group of transistors (channel-connected region) has *N* inputs and one output (*N-*input, 1-output), where *N* is an integer. In the second embodiment, for each group, the computing device may check if there is only one path from PWR (VDD) and/or GND (VSS) to the output. If yes, the computing device looks at all transistors connecting two adjacent nets on the path. If there is just one transistor, the computing device checks if the net of the gate of that transistor has a net of an opposite truth table. If yes, the computing device can reorder the path to put the transistor connecting to VDD/VSS and change the transistor with the inverted net. Thus, when there is only one path, this heuristic checks each transistor on that path and determines or identifies if its gate is connected to an inverter. If the transistor's gate is connected to an inverter, then those transistors are reordered such that the transistor that is connected to the inverter would be the transistor that directly connects to VDD/VSS. Then, there is a net merging opportunity after the transistors are reordered.

Each of the aforementioned embodiments may be combined with one another and/or with any other embodiment and/or implementation discussed herein.

### 2.1.3. Logic Simulation Aspects

The various simulations mentioned herein with respect to transistor synthesis may include one or more of the following aspects.

Some embodiments may include state analysis where a truth table simulation is performed for one or more nets. The truth table simulation may include initially partitioning the netlist, such as transistor-level netlist 134, and then generate a hierarchy tree. The truth table may be computed, for example at operation 702 in process 700, following the hierarchy tree generation. To compute the truth table, such as at operation 702 in process 700, either a sequential simulation or a flooding simulation may be performed starting from VSS and/or VDD. For the sequential simulation, a depth-first search (DFS) algorithm is run from a target net up to VDD and/or VSS, and then each path found may be reversed.

Some embodiments may include a netlist partition simulation. In these embodiments, groups are generated, such as the aforementioned channel-connected regions and/or the like. The groups may be partitioned by, for example, for each wire that is used as a gate, a flooding algorithm is run until it reaches VDD/VSS or another wire that is used as a gate. The result of the flooding algorithm is the identification of all the nets found inside the same group. While the flooding algorithm is operating, all of the inputs to that group may be identified. Furthermore, a graph of (partitioned netlist) groups may be built in topological sort order. This graph can have loops for net merged cases. If nets are merged, the groups containing the merged nets also merge, and there is still a topological order on how to evaluate the graph of groups. This is because net merging and DC-based restructuring can create loops within groups, where these groups are the channel-connected regions discussed previously. A graph that contains loops does not have a topological order, and the truth tables cannot be determined by the topological order of where transistors appear relative to PWR and GND. Instead, the flood-fill algorithm is iterated from PWR, and from GND and if a loop is encountered, that loop is followed to determine if a contradiction exists. If a contradiction exists, the final circuit state depends on the specific timing, and a more substantial simulation, such as a Spice simulation or the like, may need to be performed. If there is no contradiction, the circuit state does not depend on timing.

Some embodiments may include simulated net merging and/or non-simulated net merging. Simulated net merging may include identifying which nets can be net merged based on their truth table from state analysis. For each net merging opportunity involving either the PUP or PDN of N groups, the PUP or PDN is separated into two parts. For PUP, the primary part includes all the transistors from VDD to the target net, and the secondary part includes the remaining transistors from the target net to the output net. A same or similar process is performed for PDN. To check if net merging could remove transistors, removal of the primary part of one group is attempted and all the groups involved in this net merging opportunity are re-simulate. If the truth table does not change, then those transistors in the primary part can be removed. The non-simulated net merging may involve the first and second heuristic embodiments discussed previously.

Some embodiments may include sharing simulation(s), which may include replacing a VDD/VSS to an internal net and still keeping the same behavior.

Additionally or alternatively, some embodiments may include conditional net merging simulation(s), which may include adding a transistor between two stages in a way it can speed up the charge of a signal (potentially an output).

Some embodiments may include flooding simulation(s), which may include, for a given group of transistors being operated on, propagating the signal from VSS/VDD through the nets. Each time a net is updated, that net is put in a stack to propagate it later. This may provide for the identification of the net that was least updated. The flooding simulation(s) may be the simplest simulation mechanism, but it can be slower than other approaches.

Some embodiments may include sequential simulation(s), which may include initially detecting all the paths from VSS/VDD to a target net by running a DFS algorithm. While doing that, merge all the paths into a sequence, so if a subpath is shared between two paths, then it does not need to be simulated multiple times. Each net in a sequence may be simulated and propagated at a time.

### 3. Example System

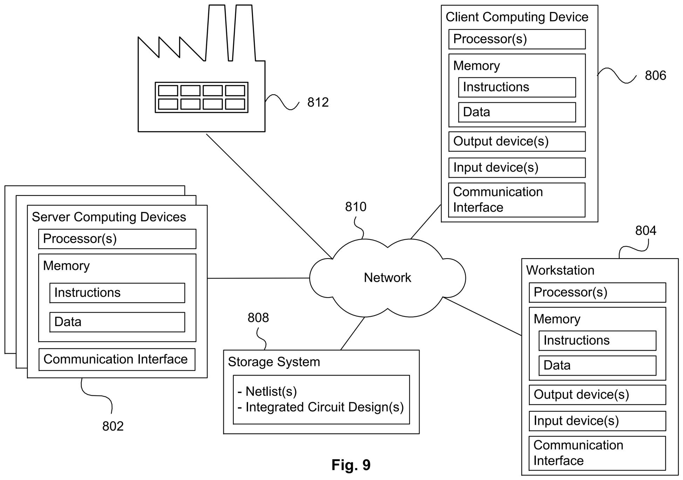

Figs. 8-9 depict an example of a system 800 configured to implement the technology discussed herein. In particular, Fig. 8 is a block diagram and Fig. 9 is a functional diagram, of an example system 800 that includes a plurality of computing devices 802, 804, 806 and a storage system (e.g., one or more databases) 808 connected via a network 810. System 800 may also include a fabrication facility 812 (also referred to as "fab 812") that is configured to produce circuitry designed according to the processes described herein.

Computing device(s) 802 may represent one or more servers and/or other physical and/or virtual computing device(s) that provide access to a pool of physical and/or virtual resources, data, services, and/or programs to other computer device(s), such as computer device(s) 804 and/or 806, over a network, such as network 810. The server(s) 802 may be implemented as web servers, application servers, email servers, file and/or storage servers, and/or run virtual machines (VMs), containers, applications, and/or other executable code. The various servers 802 discussed herein can be embodied as rack servers, tower servers, blade servers, microservers, converged infrastructure, hyper-converged infrastructure (HCI), edge servers, and/or the like. The servers 802 may represent a cluster of servers, a load balanced server farm, a cloud computing service/architecture, an edge computing network/architecture, and/or other grouping or pool of servers, which may be located in one or more datacenters and/or other sites. Additionally, the servers 802 may be interconnected with one another using any suitable networking and/or interconnection technologies, such as Ethernet, fiber channel, data center interconnect, virtual extensible LAN, InfiniBand, switch fabrics, and/or the like.

In some examples, computing devices 802 may exchange information with different network nodes for the purpose of receiving, processing, and transmitting the data to and from other computing devices. Here, the server(s) 802 may handle requests from clients such as computing devices 804, 806 and/or fab 812 (or computing devices therein), processes the requests, and returns appropriate responses via the network 810. In this regard, the server(s) 802 may provide one or more services to one or more clients. Such services may communicate with each other and/or with one or more of computing devices 804, 806 and/or fab 812 (or computing devices therein) via one or more software interfaces, such as application programming interfaces (APIs), application binary interfaces (ABIs), remote procedure calls (RPCs), and/or other interfaces.

In the example of Figs. 8-9, computing device 804 is depicted as a workstation and computing device(s) 806 is depicted as a laptop. However, the client devices 804, 806 could be other types of user devices, such as smartphones, tablet computers, desktop computers, wearable devices, video game consoles, networked appliances, drones, robots, single-board computers, plug computers or dongles, and/or any type of computing devices. Additionally or alternatively, the computing devices 802, 804, 806 may be implemented as part of fab 812 and/or any other system discussed herein.

Fab 812 may be a foundry, factory, manufacturing plant, or other location where semiconductor device fabrication takes place to produce semiconductor structures, such as integrated circuits and the like. For example, fab 812 may include various types of fabrication equipment, robots, computing systems, and/or other systems/devices configured to perform photolithographic and physico-chemical processes during which semiconductor devices are created on a wafer using various semiconducting material(s). Such semiconductor manufacturing processes may include (not in any particular order), for example, wafer preparation (e.g., ingot growth, wafer slicing, wafer cleaning, wafer polishing, etc.), oxidation, photolithography (e.g., photoresist application, mask alignment, UV light exposure, etc.), etching (e.g., wet chemical etching, dry etching, mechanical grinding, chemical mechanical planarization (CMP), etc.), ion implantation or doping, annealing (e.g., spike annealing, drive-in annealing, etc.), deposition (e.g., atomic layer deposition, molecular layer deposition, chemical vapor deposition, physical vapor deposition, conformal film deposition, etc.), planarization (e.g., CMP, etc.), metal layer deposition and patterning, passivation, die preparation, IC packaging, IC testing, and/or other processes. Additional or alternative PCB and/or semiconductor manufacturing techniques may be used, such as silk-screen printing, photoengraving, PCB milling, laser resist ablation, laser etching, plasma exposure, thermal treatments (e.g., rapid thermal processing (RTP), furnace annealing, laser annealing, thermal oxidation, etc.), plasma ashing, epitaxy, and/or the like.

As shown in Fig. 9, each of the computing devices 802, 804, and 806 may include one or more processors, memory, data and instructions. Some or all of the computing devices 802, 804, and 806 may also include communication interfaces, output device(s), and/or input device(s).

The one or more processors may include one or more general-purpose processors, which may be processor(s) designed to perform a wide variety of tasks and/or processor(s) capable of running a broad range of applications and programs efficiently. Additionally or alternatively, the one or more processors may include one or more special-purpose processors, which may be processor(s) designed to perform specific tasks or functions with relatively high efficiency and/or processor(s) optimized for particular applications or workloads. By way of example, the one or more processors may include any number and/or combination of: central processing units (CPUs), graphical processing units (GPUs), accelerated processing units (APUs), microcontrollers, neural processing units (NPUs), tensor processing units (TPUs), hardware accelerators, p-bit devices, application-specific integrated circuits (ASICs), field-programmable gate arrays (FPGAs), digital signal processors (DSPs), network processors, data processing units (DPUs), quantum processing units (QPUs), crypto-processors, programmable logic devices (PLDs), and/or any other hardware-based processor. References to a processor or processor(s) should be understood to include references to a single processor or a collection of processors that may or may not operate in parallel.

The memory for each computing device stores information accessible by the one or more processors, including instructions and data that may be executed or otherwise used by the processor(s). The memory may be of any type capable of storing information accessible by the processor, including a computing device or computer-readable medium, or other medium that stores data that may be read with the aid of an electronic device, such as random access memory (RAM), read-only memory (ROM), non-volatile RAM (NVRAM), flash memory, solid-state storage, memory cards, magnetic disk storage mediums, optical storage mediums such as CDs and DVDs, as well as other write-capable and read-only memories. Systems and methods may include different combinations of the foregoing, whereby different portions of the instructions and data are stored on different types of media.

The instructions may be any set of instructions to be executed directly (such as machine code) or indirectly (such as scripts) by the processor. For example, the instructions may be stored as computing device code on the computing device-readable medium. In that regard, the terms "instructions" and "programs" may be used interchangeably herein. The instructions may be stored in object code format for direct processing by the processor, or in any other computing device language including scripts or collections of independent source code modules that are interpreted on demand or compiled in advance. The instructions may be stored in additional or alternative formats. The flows shown by Fig. 1, and the process shown by Figs. 7 and 8, illustrate examples of algorithms that may be implemented according to such instructions or programs.

The data may be retrieved, stored or modified by one or more processors in accordance with the instructions. The data may also be formatted in any computing device-readable format. For instance, although the claimed subject matter is not limited by any particular data structure, the data may be stored in computing device registers, in relational and/or non-relational databases having a plurality of different fields and records, electronic documents (e.g., HTML, XML, JSON, Protobufs, etc.) or flat files, HDL information, GDSII information, and/or the like. The data may also be formatted and/or stored in any computing device-readable format.

The computing devices may also include a communication system having one or more wired or wireless connections to facilitate communication with other computing devices of system 800 and/or the fabrication facility 812. The communication interfaces may include interconnection or network interface controllers, components, or other suitable devices to communicate with one or more peripheral devices such as input and/or output device(s), one or more databases such as database(s) 808, and/or network nodes via one or more networks such as network 810. For example, the communication interfaces may include wired communication components (e.g., for coupling via USB, Ethernet, fiber optics, and/or the like), cellular communication components, wireless local area network (WLAN), short range communication components, NFC components, and other communication components. It should be noted that the computing devices 802 may also be connected to network 810 and/or to one another via an external communication interface, such as a switch fabric, gateway node, and/or the like.

The computing devices may include all of the components normally used in connection with a computing device such as the processor and memory described above as well as a user interface having one or more input devices (e.g., one or more of a button, mouse, keyboard, touch screen, touch pad, gesture input, dial, switch, microphone, sensors such as sensors including cameras and the like, etc.), various output devices (e.g., electronic display having a screen or projector, speakers, actuators or haptic feedback devices, etc.), and/or other devices/components to enable user interaction with the computing devices.

The various computing devices may communicate directly or indirectly via one or more networks, such as network 810. The network 810 and any intervening nodes may include various configurations and protocols including wired protocols (e.g., Ethernet, etc.), fiber optics networks, cellular communication protocols (e.g., 3GPP) LTE, 3GPP 5G/NR, WiMAX, GSM, etc.), WLAN communication protocols (e.g., WiFi^{®}, Infrared Data Association (IrDA), P2P, etc.), short range communication protocols (e.g., Bluetooth^{™}, WiFi-direct, Miracast, ANT+, Z-Wave, Zigbee^{®}, etc.), the Internet (e.g., including HTTP, TCP/IP, and/or other Open Systems Interconnection (OSI) layer protocols), intranets, enterprise networks, virtual private networks, wide area networks, local networks, private networks using communication protocols proprietary to one or more companies, and various combinations of the foregoing. Such communication may be facilitated by any device capable of transmitting data to and from other computing devices, such as modems and wireless interfaces.

The computing devices may be configured to implement the logic synthesis optimization techniques discussed herein. In some examples, client computing device 804 may be an engineering workstation used by a developer to perform circuit design and/or other processes for integrated circuit design and fabrication. Client computing device 806 may also be used by a developer, for instance to prepare system requirements for the integrated circuit or manage the manufacturing process with the fabrication facility 812. Servers 802 may also be used via the client devices 804, 806 to perform EDM processes, such as EDM flow 100 of Fig. 1, including tasks/operations of one or more of front-end design flow 102, logic synthesis 105, and/or physical design flow 110, including the DC-based transistor netlist optimization process(es) discussed herein. For example, one or more servers 802 (or individual virtual machines or containers running on the server(s) 802) may, based on commands/instructions from a client device 804 and/or 806, operate the transistor count optimization process 700 of Fig. 7 and/or the transistor-level netlist optimization process 800 of Fig. 8 to optimize a transistor-level netlist, such as netlist 134, as part of a transistor synthesis stage, such as the transistor synthesis stage 132 of physical design flow 110. The optimized transistor-level netlist 134 may then be used as a basis for fabricating ICs at the fab 812 based on, for example IC layout 140.

Storage system 808 can be of any type of computerized storage capable of storing information accessible by the server computing devices 802, 804 and/or 806, such as a hard-drive, memory card, ROM, RAM, DVD, CD-ROM, flash drive and/or tape drive. In addition, storage system 808 may include a distributed storage system where data is stored on a plurality of different storage devices which may be physically located at the same or different geographic locations. Storage system 808 may be connected to the computing devices via the network 810 as shown in Figs. 8-9, and/or may be directly connected to or incorporated into any of the computing devices. Storage system 808 may store various types of information. For instance, the storage system 808 may store one or more optimization algorithms, ground-truth datasets, trained ML models, AIGs, netlists, IC designs and/or layouts, and/or other IC-related data. Alternatively or additionally, storage system 808 may store the any final circuitry designs that may be provided for circuit fabrication by facility 812.

### 4. Further Remarks

For the purposes of the present disclosure, the singular forms "a," "an" and "the" are intended to include plural forms as well, unless the context clearly indicates otherwise. The terms "comprises" and/or "comprising," when used herein, specify the presence of stated features, integers, steps, operations, elements, and/or components, but do not preclude the presence or addition of one or more other features, integers, steps, operations, elements, components, and/or groups and/or combinations thereof. Additionally, the phrase "A and/or B" means (A), (B), or (A and B), and the phrase "A, B, and/or C" means (A), (B), (C), (A and B), (A and C), (B and C), or (A, B and C). The phrase "X(s)" means one or more X, a set of X, or a plurality of X. As used herein, the term "each" refers to each member of a set or each member of a subset of a set. The phrases "in an embodiment," "In some embodiments," "in one implementation," "In some implementations," "in some examples", and other similar phrases used herein may refer to one or more of the same or different embodiments, implementations, and/or examples. Furthermore, the terms "comprising," "including," "having," and the like, as used with respect to the present.

Reference to "one or more processors" herein includes situations where a set of processors may be configured to perform one or more operations. Any combination of such a set of processors may perform individual operations or a group of operations, in series and/or in parallel. This may include two or more CPUs, GPUs, TPUs, NPUs, QPUs, ASICs, FPGAs, DSPs, PLDs (or other hardware-based processing elements), or any combination thereof. It may also include situations where the processors have multiple processing cores. Therefore, reference to "one or more" such devices do not require that all processing elements (or cores) in the set must each perform all of the operations. Rather, unless expressly stated, any one of the one or more processing elements (or cores) may perform different operations when a set of operations is indicated, and different processing elements (or cores) may perform specific operations, either sequentially or in parallel.

References to "optimization" herein includes a situation, act, process, or methodology of making something (e.g., a design, system, decision, etc.) as efficient, functional, or effective as possible. Additionally, references to "optimal" herein may include a desirable or satisfactory end, outcome, or output. Moreover, references to an "optimum" herein may refer to the amount or degree of something that is favorable to some end and/or an extrema (maximum or minimum) point of the objective function.

Unless otherwise specifically noted, articles depicted in the drawings are not necessarily drawn to scale. In the appended drawings, which are not necessarily drawn to scale, like numerals may describe similar components in different views. Like numerals having different letter suffixes may represent different instances of similar components.

Although the technology herein has been described with reference to particular embodiments and configurations, it is to be understood that these are merely illustrative of the principles and applications of the present technology. It is therefore to be understood that numerous modifications may be made to the illustrative embodiments and that other arrangements may be devised without departing from the spirit and scope of the present technology as defined by the appended claims. By way of example only, components that are illustrated as being arranged in series may have a complementary configuration in parallel; similarly, components that are illustrated as being arranged in parallel may have a complementary configuration in series.

## Claims

1. A computer-implemented method of transistor synthesis, the method comprising:
identifying, by at least one processor, a set of nets within a transistor-level netlist;
computing, by the at least one processor, truth tables for each net in the set of nets;
identifying, by the at least one processor, a subset of nets from the set of nets having same truth tables up to don't cares;
generating, by the at least one processor, a circuit configuration by connecting at least two nets from the subset of internal nets;
attempting, by the at least one processor, restructuring of the circuit configuration based on don't cares in truth tables of the connected at least two nets; and
generating, by the at least one processor, an updated transistor-level netlist based on the restructured circuit configuration.

2. The method of claim 1, wherein the computing the truth tables comprises:
identifying, by the at least one processor, a first subset of nets from among the set of nets that are connected to a power source when an input is applied to a transistor network of the transistor-level netlist;
identifying, by the at least one processor, a second subset of nets from among the set of nets that are connected to ground when the input is applied to the transistor network; and
identifying, by the at least one processor, a third subset of nets from among the set of nets that are unconnected when the input is applied to the transistor network, wherein the nets in the third subset are designated as don't cares.

3. The method of claim 1 or 2, wherein identifying the subset of nets having the same truth tables up to don't cares comprises:
converting, by the at least one processor, an output of each net into a binary number based on the truth tables of each net; and
performing, by the at least one processor, a modulo don't care comparison of the binary number of each net, wherein don't care bits are treated as wildcard values matching any value in their respective positions.

4. The method of any one of claims 1 to 3, wherein attempting the restructuring of the circuit configuration comprises:
removing, by the at least one processor, at least one transistor from the circuit configuration.

5. The method of claim 4, wherein the at least one transistor is removed from the circuit configuration when:
the at least one transistor is a p-channel metal-oxide-semiconductor (PMOS) and is positioned closer to a power source than another transistor in the circuit configuration; or
the at least one transistor is a n-channel metal-oxide-semiconductor (NMOS) and is positioned closer to a ground source than another transistor in the circuit configuration.

6. The method of claim 4 or 5, wherein the at least one transistor is removed from the circuit configuration when the at least one transistor is determined to be a satisfiability don't care or an observability don't care.

7. The method of any one of claims 4 to 6, wherein removing the at least one transistor from the circuit configuration comprises:
removing at least one of at least two adjacent transistors after connecting the at least two nets from the subset of nets; and
determining whether the circuit configuration has a same output with and without the removed the at least one of at least two adjacent transistors.

8. The method of any one of claims 1 to 7, wherein attempting the restructuring of the circuit configuration comprises:
inserting, by the at least one processor, at least one transistor into the circuit configuration.

9. The method of claim 8, wherein the at least one transistor into the circuit configuration by connecting the at least one transistor to a wire connecting the at least two nets.

10. The method of any preceding claim, wherein attempting the restructuring of the circuit configuration comprises:
rearranging, by the at least one processor, a position or orientation of one or more transistors in the circuit configuration.

11. The method of any preceding claim, wherein, generating the circuit configuration comprises connecting the at least two nets from the subset of internal nets without changing the functionality of the entire circuit.

12. The method of any preceding claim, further comprising outputting the updated transistor-level netlist for transmission to a fabrication facility for fabrication of an integrated circuit.

13. The method of claim 12, further comprising transmitting the updated transistor-level netlist to the fabrication facility for fabrication of an integrated circuit.

14. The method of any preceding claim, further comprising providing the updated transistor-level netlist to a fabrication facility for fabrication of an integrated circuit.

15. A computing system, comprising:
at least one memory device configured to store instructions for performing transistor synthesis; and
at least one processor connected to the at least one memory device, wherein the at least one processor is configured to execute the instructions to perform a method of any one of claims 1 to 14.
